(19) Europäisches Patentamt
European Patent Office
Office européen des brevets

(11) **EP 3 882 569 B1**

(12) **EUROPÄISCHE PATENTSCHRIFT**

(45) Veröffentlichungstag und Bekanntmachung des Hinweises auf die Patenterteilung:
**06.12.2023 Patentblatt 2023/49**

(51) Internationale Patentklassifikation (IPC):
**G01C 3/08** (2006.01)    **G01C 3/10** (2006.01)
**G01S 11/12** (2006.01)

(21) Anmeldenummer: **21162242.8**

(22) Anmeldetag: **12.03.2021**

(52) Gemeinsame Patentklassifikation (CPC):
**G01C 3/08; F41G 7/2253; F41G 7/2293;**
**G01C 3/10; G01S 11/12**

(54) **VERFAHREN ZUR ERMITTLUNG EINES ZIELOBJEKTS, ELEKTRO-OPTISCHES SENSORSYSTEM, VERFAHREN ZUR NAVIGATION EINES LENKFLUGKÖRPERS UND LENKFLUGKÖRPER**

METHOD FOR DETERMINING A TARGET OBJECT, ELECTRO-OPTICAL SENSOR SYSTEM, GUIDED MISSILE AND METHOD FOR NAVIGATING A GUIDED MISSILE

PROCÉDÉ DE DÉTERMINATION D'UN OBJET CIBLE, SYSTÈME DE CAPTEUR ÉLECTRO-OPTIQUE, PROCÉDÉ DE NAVIGATION D'UN MISSILE ET MISSILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.03.2020 DE 102020001827**

(43) Veröffentlichungstag der Anmeldung:
**22.09.2021 Patentblatt 2021/38**

(73) Patentinhaber: **Diehl Defence GmbH & Co. KG**
**88662 ÜBERLINGEN (DE)**

(72) Erfinder:
- **Wällermann, Heinrich**
  **91217 Hersbruck (DE)**
- **Kushauer, Jörg**
  **88693 Deggenhausertal (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
**WO-A1-2014/008968    US-A- 5 373 318**

EP 3 882 569 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die zu Grunde liegende Erfindung betrifft insbesondere ein rechnerbasiertes Verfahren zur Ermittlung der Entfernung eines Zielobjekts von einer elektro-optischen Sensoreinheit, ein elektro-optisches Sensorsystem, ein Verfahren zur Navigation eines Lenkflugkörpers sowie einen Lenkflugkörper.

Bei der Beobachtung von Zielobjekten, beispielsweise in Kampfgebieten im Rahmen der Aufklärung und Bekämpfung gegnerischer Ziele und im Rahmen der Navigation eines Lenkflugkörpers zu einem Zielobjekt, ist die Kenntnis der Entfernung zum Zielobjekt von besonderer Bedeutung.

Bei Lenkflugkörpern werden herkömmlicherweise beispielsweise aktive Laserentfernungsmesser oder andere aktive Entfernungsmesser, wie z.B. Radar, verwendet. Solche aktiven Entfernungsmesser haben jedoch den entscheidenden Nachteil, dass diese vom Ort des Zielobjekts aus aufgeklärt werden können, verbunden mit der Gefahr, vom Zielobjekt, sprich Gegner, unter Feuer genommen zu werden.

Aus taktisch-operationellen Erwägungen heraus wäre es insoweit vorteilhaft und erstrebenswert, die Zielentfernung auf rein passivem Wege ausreichend genau bestimmen zu können. Entsprechende Überlegungen gelten auch für zivile Anwendungen bei mobilen Geräten wie Digitalkameras, Datenbrillen, sog. Head-Mounted-Displays, und anderen.

Die WO 2014/008968 A1 beschäftigt sich mit einem Verfahren zum Ermitteln einer Position eines Fahrzeugs, bei welchem mittels eines Sensors ein Objekt in einer Umgebung des Fahrzeugs erfasst wird. Es wird unter Anwendung trigonometrischer Rechenoperationen eine Relativposition des Fahrzeugs zu dem Objekt ermittelt, wobei die Position des Objekts angebende Datenwerte berücksichtigt werden.

Die US 5 373 318 A offenbart ein Verfahren zur passiven Abstandsmessung an Bord eines Flugzeugs zur Bestimmung des Abstands zwischen dem Flugzeug und einem Ziel. In die Berechnung des Abstands finden die über einen Video-Tracker gewonnenen Daten zur Abmessung bzw. Änderung der Abmessung des Ziels Eingang.

Vor diesem Hintergrund ist es eine Aufgabe der Erfindung, ein Verfahren zur Ermittlung der Entfernung eines Zielobjekts, ein elektro-optisches Sensorsystem, ein Verfahren zur Navigation eines Lenkflugkörpers und einen Lenkflugkörper anzugeben, die es möglichen, die Entfernung eines Zielobjekts rein passiv zu ermitteln.

Diese Aufgabe wird gelöst durch die Merkmale der unabhängigen Ansprüche. Ausgestaltungen der Erfindung ergeben sich aus den abhängigen Ansprüchen sowie aus den nachfolgend beschriebenen Ausführungsformen und Ausführungsbeispielen.

Der vorliegenden Erfindung liegt insbesondere die Erkenntnis zu Grunde, dass auf Grundlage von monokularen Sensordaten eines elektro-optischen Sensorsystems die Entfernung eines vom Sensorsystem erfassten Zielobjekts auf passivem Wege vergleichsweise zuverlässig und genau ermittelt werden kann.

Insbesondere liegt der Erfindung die Erkenntnis zu Grunde, dass ein wie hierin beschriebenes passives Verfahren zur Ermittlung von Entfernungen auf Basis von monokularen Bildfolgen, insbesondere dynamischen Bildfolgen, umgesetzt werden kann, ohne dass aufwändige hardware-seitige Anpassungen der, z.B. bei Lenkflugkörpern oder anderen Geräten oder Systemen verwendeten, Sensoreinheiten als solche erforderlich wären.

Ferner liegt der Erfindung die Erkenntnis zu Grunde, dass das hierin vorgeschlagene Verfahren insbesondere geeignet ist, Entfernungen eines Zielobjekts auf Grundlage von monokularen Sensordaten eines Zielsuchkopfs eines Lenkflugkörpersystems zu ermitteln, wobei die ermittelten Entfernungen ausreichend zuverlässig und genau sind und entsprechend eine Verwendung bei der Zielnavigation des Lenkflugkörpers ermöglichen. Insbesondere ist es eine Erkenntnis der Erfindung, dass eine passive Entfernungsermittlung im Anwendungsbereich der Lenkflugkörper auch auf Grundlage von monokular erzeugten Bilddaten möglich ist, so dass Sensordaten der bei Lenkflugkörpern bereits verwendeten monokularen Zielsucheinheiten zur Ermittlung der Entfernung herangezogen werden können, ohne dass es beispielsweise erforderlich wäre binokulare Sensoreinheiten oder aktive Entfernungsmesser nachzurüsten oder zu verwenden.

Entsprechend den Erkenntnissen der zu Grunde liegenden Erfindung haben elektro-optische Sensoren, insbesondere Bildsensoren, und Sensoreinheiten auf Halbleiterbasis in den letzten Jahren hinsichtlich Baugröße, Auflösung, Kontrast, Dynamik, Rauschunterdrückung und Bildauswertung erhebliche Fortschritte verzeichnet. Kombiniert mit ausgefeilten Algorithmen, die die Veränderungen in den einzelnen Pixeln von Bild zu Bild auswerten, sind neuartige oder bisher noch nicht mögliche Anwendungen umsetzbar.

Hochauflösende Detektoren für die Sicht bei Tag (z.B. CMOS/HD mit $1.920 \times 1.080$ Pixel) und Infrarot-Detektoren (z.B. $1.024 \times 1.024$ Pixel) für die Sicht bei Nacht finden verbreitet Verwendung für den Einsatz in Lenkflugkörpern und anderen Geräten und Systemen wie z.B. Digitalkameras, Fahrassistenzsystemen, Datenbrillen, sog. Head-Mounted-Displays, usw.

Des Weiteren hat eine Miniaturisierung von MEMS-Inertialsensoren (MEMS: mikroelektronisches mechanisches System), wie z.B. Kreisel, Beschleunigungsmesser, Magnetometer usw., leistungsfähige und kostengünstige Inertial-Referenzanlagen hervorgebracht, die sich wegen der geringen Baugröße ebenfalls für elektro-optische Sensoreinheiten, insbesondere zur Verwendung bei Lenkflugkörpern und anderen mobilen Geräten und Systemen, eignen.

Ferner liegt der Erfindung die Erkenntnis zu Grunde, dass mit Gesetzen aus Optik und Trigonometrie Methoden und Algorithmen für die Ermittlung der Entfernung von Zielobjekten aus monokularen Sensordaten, insbesondere Bilddaten, entwickelt werden können, die eine vergleichsweise zuverlässige und genaue, passive Ermittlung der Entfernung eines Zielobjekts von der erfassenden Sensoreinheit ermöglichen.

Entsprechend werden nachfolgend Ausführungsbeispiele und Ausführungsformen der Erfindung beschrieben, die eine passive Ermittlung der Entfernung eines Zielobjekts auf Grundlage monokularer Sensordaten, insbesondere monokularer Bilddaten, ermöglichen. Ferner werden Ausführungsbeispiele und Ausführungsformen beschrieben, betreffend die Anwendung des Verfahrens zur passiven Ermittlung der Entfernung bei elektro-optischen Sensorsystemen im Allgemeinen und bei Lenkflugkörpern im Speziellen.

Gemäß Ausführungsformen ist ein rechnerbasiertes, insbesondere computer-implementiertes, Verfahren zur Ermittlung der Entfernung eines Zielobjekts von einer elektro-optischen Sensoreinheit vorgesehen. Dabei ist das rechnerbasierte Verfahren, im Weiteren auch kurz "Verfahren" genannt, gestützt auf monokulare Sensordaten, beispielsweise Bilddaten, der Sensoreinheit.

Zur Durchführung des Verfahrens eignen sich monokulare Sensordaten, die mittels einer elektro-optischen Sensoreinheit erfasst wurden. Beispielsweise können die Sensordaten mit einer monokularen Sensoreinheit, d.h. mit einer monokular betreibbaren oder monokular betriebenen Sensoreinheit, erfasst sein.

Bei der Sensoreinheit handelt es sich um eine elektro-optische Bilderfassungseinheit, beispielsweise einen elektro-optischen Bilderfassungssensor, handeln, handeln, die/der z.B. für die Sicht bei Tag und/oder für die Sicht bei Nacht eingerichtet ist.

Das nachfolgend noch genauer beschriebene Verfahren ist gestützt auf Sensordaten der Sensoreinheit, insbesondere monokular erfassten Bilddaten, d.h. monokularen Bilddaten, einer Bilderfassungseinheit oder eines Bildsensors. Die Erfassung der Sensordaten, insbesondere Bilddaten, beispielsweise durch eine monokular abbildende Optik, wird im Rahmen dieser Erfindung als "passiv" dahingehend bezeichnet, dass die Erzeugung der entsprechenden Sensordaten seitens der Sensoreinheit keine aktive Abstrahlung oder Aussendung von Strahlung, wie z.B. Laserstrahlung oder Radarstrahlung, erfordert.

Gemäß Ausführungsformen umfassen die bei dem Verfahren verwendeten Sensordaten, insbesondere Bilddaten, zwei zweidimensionale Datensätze, sprich einen zweidimensionalen ersten Datensatz und einen zweidimensionalen zweiten Datensatz. Die Datensätze sind jeweils unter Verwendung der Sensoreinheit erfasst oder aufgenommen.

Zweidimensional soll dabei bedeuten, dass die Sensorebene der erfassenden Sensoreinheit zweidimensional ausgebildet ist. Unter einem zweidimensionalen Datensatz wird insbesondere ein Datensatz verstanden, der die dreidimensionale Wirklichkeit in einen zweidimensionalen Raum, insbesondere Bildraum, abbildet. Ein Datensatz kann beispielsweise durch ein Standbild eines Bildsensors gegeben sein. Möglich ist auch, dass ein Datensatz durch ein Einzelbild (engl. frame) einer Filmsequenz gegeben ist.

Jeder der bei dem Verfahren verwendeten Datensätze umfasst eine Repräsentation des Zielobjekts. Als Repräsentation des Zielobjekts werden dabei insbesondere diejenigen Daten eines Datensatzes verstanden, aus denen das Zielobjekt auf Sensorebene, insbesondere auf Bildebene, der Sensoreinheit rekonstruierbar und/oder identifizierbar ist. Oder mit anderen Worten, als Repräsentation des Zielobjekts sollen insbesondere diejenigen Daten des Datensatzes verstanden werden, die auf Bildebene dem Zielobjekt entsprechen. Insbesondere soll als Repräsentation des Zielobjekts das Abbild des Zielobjekts in den Sensordaten verstanden werden.

Bei dem vorgeschlagenen Verfahren sind oder werden die beiden Datensätze bezüglich zweier voneinander verschiedener Aufnahmeorte erzeugt. Das impliziert, dass die Sensoreinheit zwischen der Erfassung der beiden Datensätze bewegt wird, so dass sich die Aufnahmeorte voneinander unterscheiden. Dem ersten Datensatz ist oder wird ein erster Aufnahmeort zugeordnet. Dem zweiten Datensatz ist oder wird ein vom ersten Aufnahmeort verschiedener zweiter Aufnahmeort zugeordnet.

Mithin kann die Sensoreinheit im Rahmen des Verfahrens als eine bewegte Sensoreinheit verstanden oder angesehen werden, die zumindest insoweit bewegt wird als sich die beiden Aufnahmeorte der beiden Datensätze unterscheiden. Im Beispiel eines Lenkflugkörpers ergibt sich die Bewegung der Sensoreinheit insbesondere aus der Bewegung des Lenkflugkörpers nach dessen Start. Bei Anwendung des Verfahrens allgemein zur Navigation ergibt sich die Bewegung generell aus der Navigation als solcher.

Gemäß dem vorgeschlagenen Verfahren wird die Entfernung, d.h. die Entfernung des Zielobjekts von der Sensoreinheit, als eine gewichtete Kombination, insbesondere aus einer gewichteten Summe oder als eine gewichtete Summe, zumindest eines ersten und eines zweiten Entfernungswerts ermittelt.

Der erste Entfernungswert wird basierend auf dem ersten und zweiten Datensatz auf Grundlage von Triangulation ermittelt.

Der zweite Entfernungswert wird auf Grundlage sich auf Sensorebene der Sensoreinheit aus dem ersten und zweiten Datensatz ergebender, insbesondere im Rahmen des Verfahrens ermittelter, Abmessungen, insbesondere Größen, und der Abmessungsdifferenz, insbesondere Größendifferenz, der Repräsentationen des Zielobjekts ermittelt.

Mithin wird mit dem vorgeschlagenen Verfahren die Entfernung unter Verwendung der monokularen Sensordaten als solcher ermittelt, ohne dass dazu von der Sensoreinheit ausgehende aktive Messverfahren, wie z.B. Laserdistanzmessungen, Radarmessungen o.ä., erforderlich wären. Insbesondere kann mit dem vorgeschlagenen Verfahren die Entfernung rein passiv ermittelt werden, was insbesondere aber nicht nur bei Anwendungen im Bereich der Lenkflugkörper von Vorteil ist, da das Sensorsystem und das damit verbundene Verfahren zur passiven Ermittlung der Entfernung als solche keine Möglichkeit bieten, die Position der Sensoreinheit aufzuklären.

Ferner ermöglicht die Kombination der durch unterschiedliche Algorithmen, d.h. Triangulation einerseits und Abmessung und Abmessungsdifferenz andererseits, ermittelten Entfernungswerte eine vergleichsweise zuverlässige und genaue Ermittlung der Entfernung. Auf Grund der Tatsache, dass das vorgeschlagene Verfahren unterschiedliche Algorithmen zur Ermittlung der Entfernungswerte verwendet, kann dieses als hybrides Verfahren zur Ermittlung der Entfernung bezeichnet werden. Zumindest erweist sich die mittels des hybriden Verfahrens ermittelte Entfernung als ein ausreichend genauer und zuverlässiger Schätzwert für die Entfernung des Zielobjekts im Anwendungsbereich von Lenkflugkörpern.

Bei dem Verfahren wird/werden die Aufnahmeorte und/oder der Abstand zwischen den Aufnahmeorten ermittelt und zur Ermittlung des ersten und zweiten Entfernungswerts herangezogen. Die Aufnahmeorte, genauer die jeweiligen Positionen der Aufnahmeorte, können beispielsweise auf Grundlage satellitengestützter Techniken, z.B. unter Verwendung eines globalen Satellitennavigationssystems, oder anderer Verfahren ermittelt werden. Insbesondere können die jeweiligen Aufnahmeorte, insbesondere deren Positionen, unter Verwendung eines der Sensoreinheit zugeordneten inertialen Referenzsystems, insbesondere eines inertialen Navigationssystems oder einer Inertial-Referenzanlage, ermittelt werden. Das inertiale Referenzsystem kann beispielsweise mit der Sensoreinheit derart verknüpft sein, dass dieses mit der Sensoreinheit mitbewegt wird, so dass durch Trägheitsnavigation die Aufnahmeorte, insbesondere deren Positionen, bezüglich eines inertialen Bezugssystems ermittelt werden können. Bei Verwendung eines inertialen Referenzsystems kann die Ermittlung der Entfernung im Wesentlichen vollständig auf Grundlage von intrinsischen Daten ermittelt werden, ohne dabei auf, möglicherweise nicht ständig verfügbare, manipulierbare oder aufklärbare extrinsische Daten und entsprechende Verfahren angewiesen zu sein.

Gemäß Ausführungsformen erfolgt die zur Ermittlung des ersten Entfernungswerts herangezogene Triangulierung auf Grundlage eines Dreiecks, insbesondere inertialen Dreiecks, das bezüglich eines inertialen Bezugssystems definiert ist, das der Sensoreinheit, insbesondere dem inertialen Referenzsystem, zugeordnet ist. Das Dreieck, insbesondere die Seiten des Dreiecks, sind im inertialen Bezugssystem dabei definiert durch die sich aus dem ersten und zweiten Datensatz zwischen Sensoreinheit und Zielobjekt ergebenden inertialen Sichtlinien und der sich im inertialen Bezugssystem ergebenden Verbindungslinie zwischen den beiden Aufnahmeorten, d.h. der inertialen Verbindungslinie zwischen den inertialen Aufnahmeorten.

Beispielsweise kann unter Verwendung der sich aus den inertialen Sichtlinien ergebenden inertialen Sichtlinienwinkel des ersten und zweiten Datensatzes und der Länge der inertialen Verbindungslinie unter Verwendung des Sinussatzes die Entfernung des Zielobjekts zum Aufnahmeort des ersten Datensatzes bzw. die Entfernung des Zielobjekts zum Aufnahmeort des zweiten Datensatzes durch Triangulierung ermittelt werden. Die Länge der inertialen Verbindungslinie kann dabei aus den Koordinaten der Aufnahmeorte im inertialen Bezugssystem ermittelt werden.

Möglich ist jedoch auch, die Länge der inertialen Verbindunglinie auf Grundlage der vom inertialen Referenzsystem ermittelten Geschwindigkeit der Sensoreinheit zu ermitteln. Ist die Geschwindigkeit, insbesondere der Geschwindigkeitsvektor, des Sensorsystems im inertialen Bezugssystem zwischen den beiden Aufnahmeorten im Wesentlichen konstant, kann die Länge der Verbindungslinie beispielsweise aus dem Produkt der Geschwindigkeit v und dem zeitlichen Abstand $\Delta t$ der Aufnahmen der Datensätze berechnet werden. Bei nicht konstanter Geschwindigkeit kann die Länge entsprechend durch Zeitintegration über die Geschwindigkeit ermittelt werden.

Der inertiale Sichtlinienwinkel, d.h. der sich zwischen der inertialen Sichtlinie und der Projektion der inertialen Sichtlinie auf die Sensorebenen-Normale im inertialen Bezugssystem ergebende Winkel, kann beispielsweise auf Grundlage der Abbildungscharakteristik der elektro-optischen Sensoreinheit ermittelt werden.

Wird eine Sensoreinheit, insbesondere eine inertial stabilisierte Sensoreinheit, in Kombination mit einem mit der Sensoreinheit verknüpften inertialen Referenzsystem verwendet, kann zumindest der erste Entfernungswert auf Grundlage von intrinsischen Daten ermittelt werden. Wie nachfolgend noch genauer beschrieben wird, ermöglichen Daten eines inertialen Referenzsystems auch eine Ermittlung des zweiten Entfernungswerts auf Grundlage von intrinsischen Daten. Mithin ist es möglich, die Entfernung allein auf Grundlage passiv erfasster Daten zu ermitteln.

Wie bereits erwähnt, ist es gemäß Ausführungsformen möglich, die Aufnahmeorte und/oder den Abstand zwischen den Aufnahmeorten bezüglich eines inertialen Bezugssystems, auf Basis von Messtaten einer der Sensoreinheit zugeordneten inertialen Messeinheit eines inertialen Referenzsystems zu ermitteln. Ein Vorteil der Verwendung einer inertialen Messeinheit kann insbesondere darin gesehen werden, dass die Entfernung z.B. ausschließlich gestützt auf intrinsische, passiv ermittelte Daten ermittelt werden kann, wodurch insbesondere im Bereich der Lenkflugkörper, jedoch auch in anderen Anwendungsbereichen, eine Aufklärung im Zusammenhang mit der Ermittlung der Entfernung des Zielobjekts vermieden werden kann.

Die Zuordnung der inertialen Messeinheit zur Sensoreinheit kann beispielsweise derart ausgestaltet sein, dass beide Einheiten in einer übergeordneten Einheit, z.B. dem Lenkflugkörper, integriert sind und datentechnisch mit einer oder mehreren Rechnereinheiten, die Mittel zur Ermittlung der Entfernung aufweist/en, verbunden sind. Bei Lenkflugkörpern können beispielsweise Daten einer ohnehin vorhandenen inertialen Messeinheit, insbesondere eines inertialen Referenzsystems, herangezogen werden.

Gemäß Ausführungsformen kann/können die Abmessungen und/oder die Abmessungsdifferenz der Repräsentationen des Zielobjekts aus den Datensätzen, insbesondere zweidimensionalen Datensätzen, bezüglich zumindest einer in einer inertialen Sensorebene gelegenen inertialen Richtung ermittelt werden. Im Falle zweidimensionaler Bilddaten kann als die Abmessung beispielsweise die Größe des Zielobjekts in der Bildebene der Sensoreinheit verwendet werden. Entsprechend kann als die Abmessungsdifferenz die Größendifferenz auf Bildebene, d.h. auf Sensorebene der Sensoreinheit, verwendet werden. In diesem Zusammenhang soll unter einer inertialen Richtung insbesondere eine im zugeordneten inertialen Bezugssystem definierte Richtung verstanden werden. Ferner soll unter der inertialen Sensorebene eine Ebene verstanden werden, die im inertialen Bezugssystem die Sensorebene definiert.

Weichen die tatsächlichen Sensorebenen des ersten und zweiten Datensatzes voneinander ab, indem diese beispielsweise auf Grund einer zwischen der Erfassung der Datensätze erfolgten Bewegung der Sensoreinheit zueinander verkippt sind, können diese im inertialen Bezugssystem entsprechend korrigiert werden. Analog können andere Abbildungsfehler der jeweils verwendeten Optik, z.B. Verzerrungen oder Verzeichnungen, im Zusammenhang mit der Ermittlung der Abmessung und Abmessungsdifferenz durch geeignete Algorithmen korrigiert werden.

Gemäß Ausführungsformen wird als Maß für die Abmessung der Repräsentation des Zielobjekts in der jeweiligen inertialen Sensorebene, insbesondere Bildebene, des Datensatzes, insbesondere als Grundlage zur Ermittlung oder Berechnung der Abmessung, insbesondere der Größe, die Anzahl der der Repräsentation des Zielobjekts in der jeweiligen inertialen Sensorebene längs der jeweiligen Richtung zugeordneten Bildpunkte verwendet. Als Maß, insbesondere als Grundlage zur Ermittlung oder Berechnung, der Abmessungsdifferenz kann die Differenz der Anzahl der sich aus dem ersten und zweiten Datensatz ergebenden Bildpunkte verwendet werden. Das Verfahren umfasst als weiteren Schritt: Ermitteln der Anzahl und der Differenz der Anzahl der Bildpunkte. Auf Grundlage der Anzahl und der Differenz der Anzahl der Bildpunkte kann, wie weiter unten noch gezeigt wird, ein vergleichbar einfacher und Ressourcen schonender Algorithmus zur Ermittlung des zweiten Entfernungswerts umgesetzt werden. Ferner kann die Ermittlung des zweiten Entfernungswerts auf Grundlage der Anzahl und Differenz der Anzahl der Bildpunkte rein auf passiv ermittelten Daten erfolgen, verbunden mit entsprechenden Vorteilen, insbesondere hinsichtlich Aufklärung der Sensoreinheit.

Ferner ist eine Ermittlung der Entfernung, insbesondere des ersten und zweiten Entfernungswerts, ausschließlich basierend intrinsischen Daten auch hinsichtlich der jeweils erforderlichen Sensorsysteme zur Ermittlung der Entfernung von Vorteil. Im Rahmen der Erfindung kann die Ermittlung der Entfernung beispielsweise auf monokulare Bilddaten einer Sensoreinheit und inertiale Bewegungsdaten eines inertialen Referenzsystems gestützt werden, wobei eine entsprechende Sensoreinheit und ein entsprechendes Referenzsystem bei gewissen Lenkflugkörpern ohnehin bereits vorhanden sind. Mithin kann das vorgeschlagene Verfahren bei bekannten Lenkflugkörpern oder auch anderen militärischen oder zivilen Systemen mit inertialem Referenzsystem und inertial stabilisiertem Zielsuchkopf beispielsweise auf Software-Ebene implementiert werden, ohne dass grundsätzliche Veränderungen auf Hardware-Ebene erforderlich wären.

Gemäß Ausführungsformen werden der erste und zweite Entfernungswert aus zeitlich aufeinanderfolgend, insbesondere unmittelbar aufeinanderfolgend, erzeugten, insbesondere aufgenommenen, Datensätzen ermittelt. Dabei kann ein zeitlicher Abstand der zeitlich aufeinanderfolgend erzeugten Datensätze für ein jeweils gegebenes Zielobjekt fest vorgegeben sein. Möglich ist es auch, dass der zeitliche Abstand in Abhängigkeit der inertialen Geschwindigkeit und/oder in Abhängigkeit der Bewegungsdynamik der Sensoreinheit gewählt wird. Beispielsweise kann die Sensoreinheit derart eingerichtet sein, dass diese, zumindest über einen gewissen zeitlichen Rahmen hinweg, die jeweiligen Datensätze mit einer vorgegebenen Aufnahmerate erzeugt. Zur Ermittlung der Entfernung können dabei unmittelbar aufeinanderfolgende Datensätze verwendet werden. Möglich ist jedoch auch, Datensätze zur Ermittlung der Entfernung heranzuziehen, die nicht unmittelbar aufeinanderfolgend erzeugt wurden. Ergibt sich für zwei verwendete Datensätze beispielsweise ein hoher Fehler oder gar eine Singularität in dem zur Ermittlung des ersten oder zweiten Entfernungswerts verwendeten Algorithmus, so kann zumindest einer der Datensätze ausgetauscht werden.

Werden die Datensätze auf Grundlage einer Aufnahmerate erzeugt, kann die Aufnahmerate einerseits konstant sein, und andererseits in Abhängigkeit der Position und/oder der Bewegung und/oder der Bewegungsdynamik der Sensoreinheit angepasst werden oder sein.

Gemäß Ausführungsformen wird die Sensoreinheit auf Grundlage der Sensordaten, insbesondere auf Grundlage der ermittelten Entfernung, oder allgemeiner auf Grundlage von aus den Datensätzen ermittelten oder extrahierten Zielobjektdaten längs einer Trajektorie zum Zielobjekt navigiert. Dabei kann die Bewegung der Sensoreinheit längs der Trajektorie zumindest abschnittsweise nach einem Lenkgesetz, beispielsweise gemäß einer an sich bekannten Proportionalnavigation, kommandiert werden.

In Ausführungsformen kann die Bewegung der Sensoreinheit zumindest abschnittsweise längs der Trajektorie gemäß eines modifizierten Lenkgesetzes kommandiert werden. Die Bewegung gemäß dem modifizierten Lenkgesetz kann dabei derart erfolgen, dass sich bei der Bewegung nach dem modifizierten Lenkgesetz die inertialen Sichtlinienwinkel der inertialen Sichtlinien zwischen Sensoreinheit und Zielobjekt für den ersten und zweiten Datensatz unterscheiden, insbesondere um mehr als einen vorgegebenen Wert unterscheiden. Insbesondere kann das modifizierte Lenkgesetz derart ausgestaltet sein, dass die inertialen Sichtlinien zumindest abschnittsweise längs der Trajektorie moduliert werden.

Beispielsweise kann für den Fall, dass sich die inertialen Sichtlinien bzw. die inertialen Sichtlinienwinkel, z.B. in gewissen Bewegungsphasen, nicht oder im Wesentlichen nicht unterscheiden und entsprechend große Fehler oder gar Singularitäten in den Algorithmen zur Ermittlung des ersten Entfernungswerts durch Triangulation auftreten, durch das modifizierte Lenkgesetz die Ausrichtung der Sensoreinheit relativ zum Zielobjekt verändert werden, so dass inertiale Sichtlinienwinkel mit ausreichendem Winkelabstand vorliegen und entsprechend kleinere Fehler erreicht werden oder Singularitäten bei der Ermittlung der Entfernung vermieden werden. Datensätze, die zu vergleichsweise großen Fehlern oder die zu Singularitäten führen, können durch geeignete Filteralgorithmen herausgefiltert und verworfen werden, um so die Robustheit und Genauigkeit der Ermittlung der Entfernung zu verbessern.

Vergleichsweise große Fehler oder Singularitäten bei der Ermittlung des ersten Entfernungswerts können beispielsweise auftreten, wenn das Zielobjekt noch vergleichsweise weit entfernt ist und die Unterschiede in den Sichtlinienwinkeln der berücksichtigten Datensätze beispielsweise kleiner sind als der Fehler der Sichtlinienwinkel bzw. wenn kein Unterschied im Sichtlinienwinkel festgestellt werden kann. Solche Situationen können beispielsweise in einer initialen Flugphase eines Lenkflugkörpers auftreten, wenn der Lenkflugkörper gemäß einem Lenkgesetz auf das Zielobjekt hin navigiert wird, so dass die Normale der Sensorebene aufeinanderfolgender Datensätze im Wesentlichen unverändert oder gar unverändert in Richtung des Zielobjekts zeigt. In solchen Situationen kann es vorkommen, dass auf Triangulation basierte Algorithmen Singularitäten aufweisen. Durch Modifikation des Lenkgesetztes können Singularitäten bei Verwendung aufeinanderfolgend aufgenommener Datensätze zumindest weitgehend vermieden werden, insbesondere dann, wenn sich die inertialen Sichtlinienwinkel um zumindest einen vorgegebenen Wert unterscheiden.

Analog können etwaige Singularitäten bei der Ermittlung des zweiten Entfernungswerts herausgefiltert und verworfen werden.

Gemäß Ausführungsformen kann das Verfahren iterativ durchgeführt werden, wobei fortlaufend Sensordaten und entsprechende Datensätze erzeugt, insbesondere aufgenommen, oder bereitgestellt werden. Ist für einen oder mehrere Datensätze eine Ermittlung des ersten oder zweiten Entfernungswerts nicht möglich, beispielsweise weil bei der Berechnung des jeweiligen Entfernungswerts Singularitäten oder vergleichsweise große Fehler auftreten, können entsprechende Datensätze herausgefiltert und verworfen werden. Zur Ermittlung der Entfernung, beispielsweise eines ersten oder zweiten Entfernungswerts, kann dann ein anderer, beispielsweise ein zeitlich früher oder später erzeugter oder aufgenommener Datensatz herangezogen werden. Möglich ist auch, dass für ein zur Ermittlung des ersten und zweiten Entfernungswerts herangezogenes Datensatzpaar im Falle einer Singularität verworfen wird, und dass das Verfahren mit dem zeitlich unmittelbar folgenden oder einem zeitlich späteren Datensatzpaar fortgeführt wird.

Gemäß Ausführungsformen kann das modifizierte Lenkgesetz auf Grundlage einer Modulation erzeugt werden. Beispielsweise kann ein Lenkgesetz mit einer Modulation überlagert werden/sein. Eine entsprechende Modulationsfunktion kann derart ausgebildet sein, dass die Modulation eine, insbesondere zeitliche, Modulation, beispielsweise eine, insbesondere zeitlich, kontinuierliche Modulation, und/oder eine, insbesondere zeitlich, gedämpfte Modulation bewirkt. Die Modulationsfunktion kann als Modulationsparameter insbesondere die Zeit, den Ort der Sensoreinheit und/oder die Entfernung umfassen. Ferner können als Modulationsparameter zusätzlich oder alternativ auch Bewegungsdaten der Sensoreinheit, insbesondere dynamische Bewegungsdaten der Sensoreinheit, verwendet werden. Die genannten Parameter Zeit, Ort, Entfernung, Bewegungsdaten und dynamische Bewegungsdaten können auch als Dämpfungsparameter für die eine gedämpfte Modulation verwendet werden.

Als Modulationsfunktion kann z.B. eine trigonometrische Funktion, wie beispielsweise die Sinus-Funktion, verwendet werden. Beispielsweise kann die Funktion sin(w*t) verwendet werden, wobei w eine Konstante (üblicherweise als Kreisfrequenz bezeichnet) und t die Zeit bedeuten. Der Start der Modulation (t=0) kann beispielsweise einem Startzeitpunkt der Bewegung der Sensoreinheit zugeordnet sein, beispielsweise dem Start der Navigation der Sensoreinheit zum Zielobjekt. Im Falle eines Lenkflugkörpers kann der Start der Modulation (t=0) dem Start oder Abschuss des Lenkflugkörpers entsprechen.

Möglich ist es jedoch auch, dass ein jeweils verwendetes Lenkgesetz immer dann modifiziert, insbesondere moduliert, wird, wenn und insoweit die aufgenommenen Datensätze keine brauchbaren oder plausiblen Entfernungswerte liefern.

Als Dämpfungsfunktion für eine gedämpfte Modulation kann beispielsweise die Exponentialfunktion exp(-Ct) verwendet werden, wobei c eine positive Konstante ist und t die Zeit.

Bei Verwendung der genannten Funktionen für eine Modulationsfunktion der Form $\sin(wt) * e^{-ct}$ erfolgt eine zeitlich kontinuierliche Sinus-Modulation des Lenkgesetztes mit zeitlicher Dämpfung. Dabei wird der Einfluss der Modulation mit fortschreitender Zeit bei geeigneter Navigation der Sensoreinheit zum Zielobjekt hin, sprich mit kleiner werdender Entfernung, geringer. Eine derartige Modulation eignet sich insbesondere bei Lenkflugkörpern mit Proportionalnavigation, da durch die Modulation in der initialen Startphase des Lenkflugkörpers mit direktem Kollisionskurs auf das Zielobjekt hin Singularitäten bei der Ermittlung des ersten Entfernungswerts vermieden werden können. Mit zunehmender Flugzeit und zunehmender Annäherung an das Zielobjekt basierend auf einer Proportionalnavigation befindet sich der Lenkflugkörper in der Regel zwar auf direktem Kollisionskurs, jedoch steigt mit zunehmender Annäherung an das Zielobjekt die Genauigkeit des zweiten Entfernungswerts, so dass es möglich ist, mit zunehmender Annäherung die Entfernung zum Zielobjekt mit auf Grundlage lediglich des zweiten Entfernungswerts und unter Ausblendung des ersten Entfernungswerts zu ermitteln. Entsprechend können mögliche Singularitäten bei der Ermittlung des ersten Entfernungswerts durch geeignete Algorithmik, beispielsweise durch geeignete Wahl von Gewichtungsfunktionen, ausgeblendet werden. Einhergehend damit kann die Modulation, beispielsweise durch geeignete Wahl des exponentiellen Dämpfungsfaktors, reduziert werden, so dass der Lenkflugkörper in der entscheiden Endphase der finalen Annäherung im Wesentlichen, d.h. mit zumindest vernachlässigbarem Beitrag der Modulationsfunktion, gemäß dem unmodifizierten Lenkgesetz und basierend auf dem, denn vergleichsweise genauen, zweiten Entfernungswert kommandiert werden kann.

Gemäß Ausführungsformen kann die Modulation auch oder alternativ in Abhängigkeit der Anzahl oder Häufigkeit von Singularitäten bei der Ermittlung des ersten Entfernungswerts und/oder in Abhängigkeit der Genauigkeit des ersten und zweiten Entfernungswerts eingestellt werden.

Gemäß Ausführungsformen kann der erste Entfernungswert mit einer ersten Gewichtungsfunktion, insbesondere einem ersten Gewichtungsfaktor, gewichtet werden, und der zweite Entfernungswert kann mit einer zweiten Gewichtungsfunktion, insbesondere einem zweiten Gewichtungsfaktor, gewichtet werden. Basierend auf den Gewichtungsfunktionen können jeweilige Stärken bzw. Schwächen der jeweiligen Algorithmen und Verfahren zur Ermittlung der Entfernungswerte berücksichtigt werden.

Beispielsweise kann bei noch großer Entfernung des Zielobjekts ein auf Grundlage der Bildpunkte des Zielobjekts in den Datensätzen, insbesondere Bilddaten, ermittelter zweiter Entfernungswert auf Grund einer noch geringen Bildpunktdynamik einen vergleichsweise großen Fehler aufweisen. Entsprechend kann der zweite Entfernungswert mit einem entsprechend kleinen Gewichtungsfaktor gewichtet werden. Insbesondere kann für den zweiten Entfernungswert in diesem Fall eine Gewichtungsfunktion verwendet werden, deren Wertebereich bei noch vergleichsweise großer Entfernung klein ist, wobei entsprechend die erste Gewichtungsfunktion vergleichsweise große Werte annimmt.

Bei geringer Entfernung zum Zielobjekt kann der auf Grundlage der Abmessungen der Repräsentation ermittelte Entfernungswert genauere Entfernungswerte liefern als der auf Triangulation basierende erste Entfernungswert. Entsprechend kann/können die zweite Gewichtungsfunktion, insbesondere zweite Gewichtungsfaktoren, so gewählt sein, dass der zweite Entfernungswert mit zunehmender Annäherung an das Zielobjekt, beispielsweise in einer finalen Annäherungsphase eines Lenkflugkörpers auf das Zielobjekt hin, stärker gewichtet wird.

Basierend auf der Kombination der ersten und zweiten Entfernungswerte unter Verwendung einer Gewichtungsfunktion kann insbesondere die Zuverlässigkeit und Genauigkeit der ermittelten Entfernung weiter verbessert werden.

In diesem Zusammenhang soll erwähnt werden, dass ein einzelner Gewichtungsfaktor oder nach Art einer Stufenfunktion, z.B. in Abhängigkeit der Zeit oder der Entfernung, gewählte Gewichtungsfaktoren im Sinne der Erfindung als eine Gewichtungsfunktion angesehen werden.

Gemäß Ausführungsformen kann für die erste und zweite Gewichtungsfunktion zumindest eine der folgenden Bedingungen gelten:

- Die erste Gewichtungsfunktion liefert einen von der ermittelten Entfernung abhängigen Wert, wobei der Wert umso kleiner ist, je kleiner die Entfernung ist. Damit kann der Tatsache Rechnung getragen werden, dass die Ermittlung des zweiten Entfernungswerts auf Grundlage der Abmessungen und Abmessungsdifferenzen bei kleiner Entfernung auf Grund einer dann vorliegenden höheren Bildpunktdynamik vergleichsweise zuverlässig ermittelt werden kann. Entsprechend kann der erste Entfernungswert mit kleiner werdender Gewichtungsfunktion gewichtet werden.

- Die erste Gewichtungsfunktion liefert einen vom Fehler des ersten Entfernungswertes und/oder vom Fehler des zweiten Entfernungswerts abhängigen Wert, wobei der Wert umso größer ist, je kleiner der Fehler des ersten Entfernungswerts ist oder umso kleiner ist, je kleiner der Fehler des zweiten Entfernungswerts ist. Damit kann der Genauigkeit der jeweils verwendeten Methode zur Ermittlung des ersten und zweiten Entfernungswerts Rechnung getragen werden, so dass diejenigen Entfernungswerte mit jeweils kleinem Fehler stärker gewichtet werden.

- Die erste Gewichtungsfunktion und/oder die zweite Gewichtungsfunktion entspricht/entsprechen einer empirisch ermittelten Funktion. Beispielsweise können entsprechende Gewichtungsfunktionen durch Simulation, beispielsweise durch Simulation von Flugbahnen von Lenkflugkörpern basierend auf einem Lenkgesetz, ermittelt werden.

- Der ersten Gewichtungsfunktion und/oder der zweiten Gewichtungsfunktion wird/werden insbesondere dann ein Nullwert zugewiesen, wenn ein zur Ermittlung des ersten Entfernungswerts bzw. des zweiten Entfernungswerts verwendeter Algorithmus, beispielsweise eine Funktion oder Rechenvorschrift, eine Singularität oder Polstelle aufweist. Dies ist insbesondere eine Möglichkeit, Datensätze, die zu Singularitäten bei der Ermittlung der Entfernungswerte führen, zu verwerfen.

- Der ersten Gewichtungsfunktion und/oder der zweiten Gewichtungsfunktion wird insbesondere dann ein Nullwert zugewiesen, wenn der ermittelte erste Entfernungswert bzw. der ermittelte zweite Entfernungswert um einen vorgegebenen Wert von einer empirisch ermittelten Entfernung oder einer durch ein unabhängiges Verfahren ermittelten Entfernung abweicht, insbesondere größer ist als die empirische, z.B. geschätzte, oder unabhängig ermittelte Entfernung. Ein solches Vorgehen kann insbesondere verwendet werden, wenn Vorwissen über die etwaige Entfernung des Zielobjekts vorhanden ist, wenn geschätzte Entfernungswerte vorliegen oder durch unabhängige Verfahren ermittelt werden können. Insoweit kann eine Art Heuristik bereitgestellt werden, mit der deutlich falsche Entfernungswerte herausgefiltert werden können. Die Zuweisung eines Nullwerts entspricht dem bereits weiter oben beschriebenen Vorgehen, Entfernungswerte und entsprechende Datensätze, zu ignorieren, wegzulassen oder zu verwerfen, wobei eine Weglassung nicht zwingend durch eine Singularität im jeweils verwendeten Algorithmus bedingt sein muss, sondern auch auf andere Fakten, wie beispielsweise den Fehler im ermittelten Entfernungswert, gestützt sein kann.

- Die erste Gewichtungsfunktion und/oder die zweite Gewichtungsfunktion ist/sind abhängig von Bewegungsdaten, insbesondere dynamischen Bewegungsdaten, der Sensoreinheit. Solche Abhängigkeiten können beispielsweise durch Simulation ermittelt werden, wobei insbesondere jeweilige Gegebenheiten, wie beispielsweise die Manövrierfähigkeit eines Lenkflugkörpers, berücksichtigt werden können.

- Die erste Gewichtungsfunktion und/oder die zweite Gewichtungsfunktion ist/sind abhängig von einer sich auf inertialer Bildebene ergebenden oder ermittelten Abmessung und/oder Abmessungsdynamik der Repräsentation des Zielobjekts. Dabei kann beispielsweise die erste Gewichtungsfunktion umso größer sein, je kleiner die Abmessung und/oder Abmessungsdynamik der Repräsentation des Zielobjekts ist. Ferner kann die zweite Gewichtungsfunktion umso größer sein, je größer die Abmessung und/oder Abmessungsdynamik der Repräsentation des Zielobjekts ist. Durch eine solche Gewichtung kann beispielsweise erreicht werden, dass bei kleiner Abmessungsdynamik, beispielsweise bei kleiner Bildpunktdynamik, der auf Triangulation basierende Entfernungswert stärker gewichtet ist, da beispielsweise bei kleiner Abmessungsdynamik der Fehler der Ermittlung des zweiten Entfernungswerts vergleichsweise groß sein kann, insbesondere verglichen mit dem auf Triangulation basierten Entfernungswert.

Gemäß Ausgestaltungen der Erfindung ist ein Verfahren zur Navigation, insbesondere Lenkung, eines Lenkflugkörpers zu einem Zielobjekt vorgesehen, das Verfahren umfasst die folgenden Schritte:

- Ermitteln der Entfernung eines Zielobjekts vom Lenkflugkörper gemäß einem Verfahren nach einer der hierin beschriebenen Ausgestaltungen und Ausführungsformen;
- Ermitteln von Lenksignalen zur Lenkungssteuerung des Flugkörpers in Abhängigkeit der ermittelten Entfernung basierend auf einem Lenkgesetz oder, zumindest teilweise, auf einem modulierten Lenkgesetz; und
- Steuerung von Lenk- und/oder Antriebskomponenten des Lenkflugkörpers gemäß den ermittelten Lenksignalen zur Navigation des Lenkflugkörpers zum Zielobjekt.

Gestützt auf die hierin beschriebenen Ausführungsformen und Ausgestaltungen des Verfahrens zur Ermittlung der Entfernung kann eine Lenkflugkörpernavigation bereitgestellt werden, die eine passive, d.h. als solche nicht aufklärbare, Ermittlung der Entfernung des Zielobjekts ermöglicht und, basierend auf der hierin vorgeschlagenen Kombination der ersten und zweiten Entfernungswerte, eine vergleichsweise robuste und genaue Ermittlung der Entfernung ermöglicht.

Gemäß Ausgestaltungen der Erfindung ist ein elektro-optisches Sensorsystem vorgesehen. Das elektro-optische Sensorsystem umfasst als Sensoreinheit eine elektro-optische Bilderfassungseinheit mit Mitteln zur Erzeugung monokularer Bilddatensätze und zumindest eine mit der Bilderfassungseinheit datentechnisch verbundene oder verbindbare Rechnereinheit.

Die Bilderfassungseinheit und die Rechnereinheit weisen Mittel zur Durchführung eines Verfahrens zur Ermittlung der Entfernung oder zur Durchführung eines Verfahrens zur Navigation eines Lenkflugkörpers nach einem der hierin beschriebenen Ausführungsformen und Ausgestaltungen auf.

Gemäß Ausführungsformen kann das elektro-optische Sensorsystem des Weiteren eine Inertial-Referenzeinheit, z.B. ein Trägheitsnavigationssystem, ein inertiales Navigationssystem oder ein inertiales Referenzsystem, umfassen. Die Inertial-Referenzeinheit ist zumindest mit der zumindest einen Rechnereinheit oder zumindest einer weiteren Rechnereinheit datentechnisch verbunden.

Die Inertial-Referenzeinheit umfasst Mittel, die bei deren Betrieb Positionsdaten und/oder Bewegungsdaten, insbesondere Geschwindigkeits- und/oder Beschleunigungsdaten, des Sensorsystems bezüglich eines inertialen Bezugssystems ermitteln oder bereitstellen.

Die Rechnereinheit und/oder die weitere Rechnereinheit umfasst/umfassen des Weiteren Mittel, den ersten und/oder zweiten Entfernungswert zumindest teilweise auf Grundlage der Positions- und/oder Bewegungsdaten zu ermitteln. Beispielsweise kann die Rechnereinheit und/oder die weitere Rechnereinheit Mittel umfassen zur Ermittlung der Aufnahmeorte und des Abstands der Aufnahmeorte, wobei der Abstand der Aufnahmeorte beispielsweise im Rahmen der Triangulation zur Ermittlung des ersten Entfernungswerts herangezogen werden kann.

Ferner kann die Rechnereinheit und/oder die weitere Rechnereinheit Mittel umfassen zur Ermittlung der Abmessung und Abmessungsdifferenz der Repräsentation des Zielobjekts aus den Datensätzen, und des Weiteren Mittel zur Ermittlung des zweiten Entfernungswerts auf Grundlage der Abmessung und Abmessungsdifferenz

Bei den genannten Mitteln zur Durchführung der beschriebenen Schritte kann es sich insbesondere um entsprechend programmierte Rechnereinheiten handeln und/oder um auf einem elektronischen Speicher gespeicherte Instruktionen, die von einer Rechnereinheit, insbesondere einem Prozessor, ausführbar sind und bei Ausführung durch die Rechnereinheit, insbesondere den Prozessor, eine Ausführung der genannten Verfahrensschritte bewirken.

Gemäß Ausführungsformen kann die Rechnereinheit und/oder die zumindest eine weitere Rechnereinheit des Weiteren Mittel umfassen zur Erkennung des Zielobjekts in Sensordaten, insbesondere Bilddaten, die mit der Sensoreinheit in Form einer elektro-optischen Bilderfassungseinheit aufgenommenen sind/werden.

Gemäß Ausgestaltungen der Erfindung ist ein Lenkflugkörper vorgesehen, der ein elektro-optisches Sensorsystem nach einer der hierin beschriebenen Ausführungsformen und Ausgestaltungen umfasst. Auf Grund der vergleichsweise genauen und robusten Möglichkeit zur passiven Ermittlung der Entfernung des Zielobjekts gelten für den Lenkflugkörper die hierin beschriebenen verfahrensseitigen Vorteile analog.

Beispielhafte Ausgestaltungen und Ausführungsformen der Erfindung werden nachfolgend anhand der anhängenden Figuren beschrieben. Es zeigen:

FIG. 1    ein Ablaufdiagramm eines Verfahrens zur Ermittlung der Entfernung eines Zielobjekts;

FIG. 2    eine beispielhafte Inertialdarstellung zur Ermittlung des ersten Entfernungswerts;

FIG. 3    schematisch eine inertiale Abbildungsgeometrie einer zur Erfassung der Bilddatensätze verwendeten Bildsensoreinheit;

FIG. 4    beispielhaft eine Navigationstrajektorie eines Lenkflugkörpers zu einem Zielobjekt;

FIG. 5    einen generischen Aufbau eines Navigations- und Regelkreises für einen Lenkflugkörper;

FIG. 6    einen Lenkflugkörper.

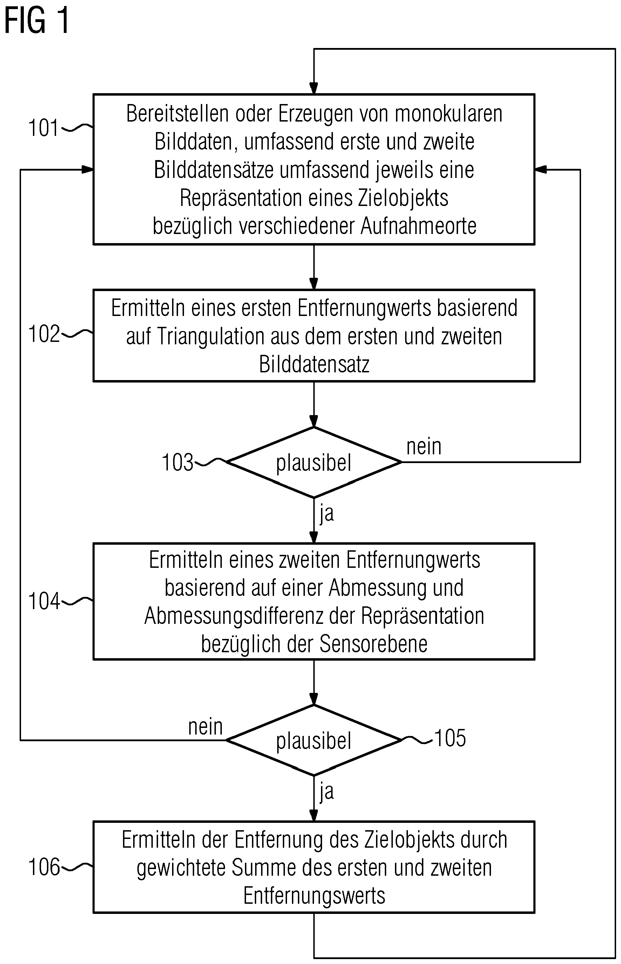

FIG. 1 zeigt ein beispielhaftes Ablaufdiagramm eines Verfahrens zur Ermittlung der Entfernung eines Zielobjekts von einer elektro-optischen Sensoreinheit- in Form einer elektro-optischen Bilderfassungseinheit.

Im nachfolgend beschriebenen Beispiel werden die Sensordaten als Bilddaten bezeichnet und korrespondierende Datensätze der Sensordaten werden als Bilddatensätze bezeichnet. Entsprechend wird die Sensoreinheit als Bilderfassungseinheit bezeichnet.

Das Verfahren umfasst einen Schritt des Bereitstellens 101 oder Erzeugens 101 von monokularen Bilddaten umfassend erste und zweite Bilddatensätze umfassend jeweils eine Repräsentation eines Zielobjekts bezüglich verschiedener Aufnahmeorte. Bei den Bilddaten handelt es sich um monokular erfasste Bilddaten eines monokularen Bildsensors einer Bilderfassungseinheit.

Die Bilddaten umfassen einen ersten monokularen Bilddatensatz und einen zweiten monokularen Bilddatensatz. Der Vorteil des Verfahrens liegt insbesondere auch darin, dass zur Ermittlung, insbesondere Berechnung, der Entfernung ein monokularer Bildsensor ausreichend ist.

Jeder der Bilddatensätze umfasst eine Repräsentation eines Zielobjekts, indem beispielsweise das Zielobjekt auf eine Bildebene des Bildsensors abgebildet ist. Die Bilddatensätze sind oder wurden an unterschiedlichen Aufnahmeorten erfasst oder aufgenommen. Entsprechende Bilddatensätze können beispielsweise während der Bewegung der Bilderfassungseinheit sukzessive erfasst werden oder worden sein. Insbesondere können die Bilddatensätze mit einer vorgegebenen Aufnahmerate erzeugt sein/werden, wobei z.B. unmittelbar aufeinanderfolgend aufgenommene Bilddatensätze bereitgestellt und im weiteren Verfahrensablauf zur Ermittlung der Entfernung herangezogen werden können.

Das Verfahren umfasst den weiteren Schritt des Ermittelns 102, insbesondere Berechnens, eines ersten Entfernungswerts, d.h. eines ersten Entfernungswerts des Zielobjekts, basierend auf Triangulation aus dem ersten und zweiten Bilddatensatz.

Der Schritt 102 kann beispielsweise eine optionale Plausibilitätsprüfung 103 umfassen, insbesondere dahingehend, ob eine Ermittlung des ersten Entfernungswerts möglich ist bzw. ob der ermittelte erste Entfernungswert bei der Ermittlung der Entfernung berücksichtigt werden soll, und/oder ob die weiteren Verfahrensschritte ausgeführt werden sollen (ja) oder nicht (nein).

Ergibt sich bei der Plausibilitätsprüfung 103 beispielsweise für den zur Ermittlung des ersten Entfernungswerts verwendeten Algorithmus eine Singularität, kann das laufende Verfahren abgebrochen und neu mit Schritt 101 und anderen Bilddatensätzen gestartet werden. Alternativ könnte auch der jeweilige Bilddatensatz verworfen werden.

Ergibt die Plausibilitätsprüfung 103 beispielsweise, dass der erste Entfernungswert nicht plausibel ist, weil er beispielsweise deutlich von einem empirischen Entfernungswert abweicht, oder weil er einen vergleichsweise großen Fehler aufweist, kann das Verfahren ebenfalls abgebrochen und mit Schritt 101 fortgesetzt werden. Anstatt das Verfahren abzubrechen könnte der entsprechende Entfernungswert auch mit einem Gewichtungsfaktor 0 (Null) gewichtet werden oder es könnte der Bilddatensatz verworfen werden.

Ein weiterer Verfahrensschritt umfasst ein Ermitteln 104 eines zweiten Entfernungswerts basierend auf einer Abmessung und Abmessungsdifferenz der Repräsentation des Zielobjekts bezüglich der Sensorebene, im vorliegenden Fall der Bildebene des Bildsensors. Mit anderen Worten wird der zweite Entfernungswert basierend auf einer Größe und Größendifferenz des Zielobjekts in der Bildebene des Bildsensors ermittelt.

Im Zusammenhang mit der Ermittlung des zweiten Entfernungswerts kann ebenfalls eine optionale Plausibilitätsprüfung 105 erfolgen, die analog zu der oben beschriebenen Plausibilitätsprüfung erfolgen kann. Beispielsweise kann bei vergleichsweise gro-$\beta$en Fehlern oder auf Grund fehlender Größendifferenzen des Zielobjekts auf Bildebene das Verfahren abgebrochen und mit Schritt 101 neu begonnen werden. Alternativ wäre es möglich, den entsprechenden Entfernungswert mit 0 (Null) zu gewichten, oder den jeweiligen Bilddatensatz zu verwerfen, und ggf. durch einen alternativen Bilddatensatz zu ersetzen.

Ergibt die Plausibilitätsprüfung 105 beispielsweise einen Ausgabewert wonach ein Algorithmus zur Ermittlung des zweiten Entfernungswerts eine Singularität aufweist, kann das Verfahren abgebrochen und mit Schritt 101 neu begonnen werten (Nein-Fall in FIG. 1).

Ergibt die Plausibilitätsprüfung 105 beispielsweise einen Ausgabewert wonach der zweite Entfernungswert deutlich von empirischen Entfernungswerten abweicht, kann der Entfernungswert mit 0 (Null) gewichtet werden, wobei in diesem Fall wegen des Gewichts Null das Verfahren trotz der negativen Plausibilitätsprüfung 105 weitergeführt werden kann. Solche Situationen können durch geeignete Filter herausgefiltert werden, wobei bei ungeeigneten Bilddatensätzen, aus denen keine geeigneten Entfernungswerte ermittelt werden können, das Verfahren abgebrochen und mit Schritt 101 und anderen Bilddatensätzen neu begonnen werden kann.

Liefern die Schritte 102 und 104 plausible Entfernungswerte, umfasst das Verfahren den weiteren Schritt des Ermittelns 106 der Entfernung des Zielobjekts durch gewichtete Kombination, im vorliegenden Beispiel durch gewichtete Summe, d.h. Summation, des ersten und zweiten Entfernungswerts.

Nach Schritt 106 kann das Verfahren iterativ weiter ausgeführt werden, wobei jeder Iteration zumindest ein, vorzugsweise zwei, neue Bilddatensätze zu Grunde gelegt werden. Bei iterativer Durchführung des Verfahrens kann die Entfernung des Zielobjekts während der Bewegung der Bilderfassungseinheit kontinuierlich ermittelt werden, insbesondere im Wesentlichen in Echtzeit.

Die ermittelte Entfernung kann zur Navigation der Bilderfassungseinheit, bzw. eines der Bilderfassungseinheit zugeordneten Objekts, z.B. eines Lenkflugkörpers, verwendet werden. Im Falle eines Lenkflugkörpers kann als Bilderfassungseinheit beispielsweise ein in der Flugkörperspitze montierter elektro-optischer Zielsuchkopf verwendet werden. Oder mit anderen Worten, die Bilddatensätze können mit dem elektro-optischen Zielsuchkopf erzeugt werden/sein.

Mit dem vorgeschlagenen Verfahren ist insbesondere eine robuste und genaue Ermittlung der Entfernung des Zielobjekts möglich, wobei die Verwendung der Bilddatensätze eine passive Ermittlung der Entfernung, verbunden mit den weiter oben beschriebenen Vorteilen, ermöglicht.

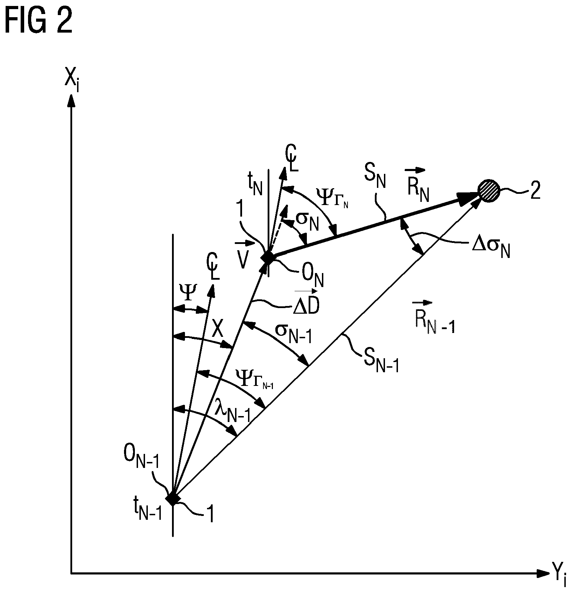

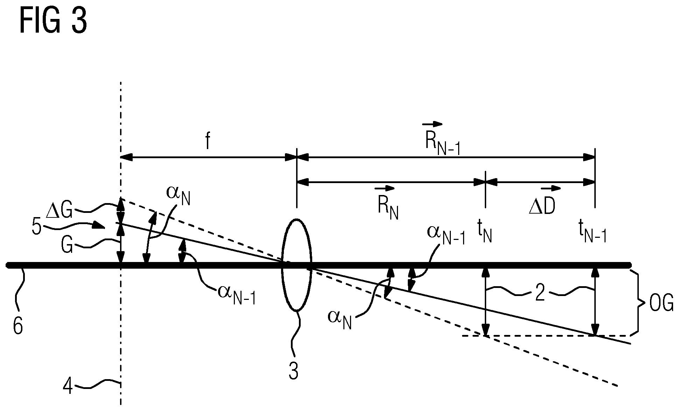

Anhand der Figuren 2 und 3 werden die Verfahrensschritte 102 und 104 nachfolgend genauer beschrieben, wobei aus Gründen der Einfachheit und Übersichtlichkeit die Beschreibung beispielhaft im zweidimensionalen Raum erfolgt. Die im zweidimensionalen Raum beschriebenen Verfahrensschritte 102 und 104 können in analoger Weise auch im dreidimensionalen Raum durchgeführt werden bzw. auf den dreidimensionalen Raum ohne Weiteres übertragen werden.

Konkret zeigt FIG. 2 eine beispielhafte nicht maßstabsgetreue Inertialdarstellung zur Ermittlung des ersten Entfernungswerts, wobei eine bewegte Bilderfassungseinheit 1, bzw. ein der Bilderfassungseinheit 1 zugeordnetes bewegtes Objekt oder System, wie z.B. ein Lenkflugkörper, und ein als ruhend angenommenes oder mit vernachlässigbarer Geschwindigkeit bewegtes Zielobjekt 2 in einer inertialen Horizontalebene ($X_i$, $Y_i$,) eines der Bilderfassungseinheit 1 zugeordneten inertialen Bezugssystems dargestellt sind. Die nachfolgenden Ausführungen gelten analog für bewegte Zielobjekte 2.

Die in der Darstellung der FIG. 2 verwendeten Winkel sind referenziert gemäß der Luftfahrtnorm Flugmechanik LN9300, auf die ausdrücklich Bezug genommen wird.

In der Darstellung der FIG. 2 bezeichnen $t_{N-1}$ und $t_N$ zwei unterschiedliche Abtastzeitpunkte, d.h. Aufnahmezeitpunkte, zu welchen ein erster Bilddatensatz korrespondierend zu $t_{N-1}$ und ein zweiter Bilddatensatz korrespondierend zu $t_N$ aufgenommen wurden bzw. werden.

Es bezeichnen (in FIG. 2 korrespondierend zu Zeitpunkten $t_N$ bzw. $t_{N-1}$ mit N bzw. N-1):

- S den inertialen Sichtlinienvektor;
- λ (Lambda) den Winkel des inertialen Sichtlinienvektors;
- Ψ (Psi) den inertialen Normalenwinkel der Bildebene des Bildsensors der Bilderfassungseinheit;
- **X** (Chi) den inertialen Geschwindigkeitswinkel der Bewegung der Bilderfassungseinheit;
- $\Psi_\Gamma$ (Psi$_{Gamma}$) den inertialen Sichtlinienwinkel;
- Φ (Phi) den Normalenvektor der Bildebene;
- $\vec{v}$ den inertialen Geschwindigkeitsvektor;
- $\vec{R}$ den inertialen Entfernungsvektor des Zielobjekts 2;
- σ den inertialen Winkel zwischen inertialem Geschwindigkeitsvektor und dessen Projektion auf den inertialen Sichtlinienvektor S;
- **O** den inertialen Aufnahmeort bzw. inertialen Abtastort; und
- ΔD den inertialen Abstand zwischen den Aufnahmeorten.

Die oben genannten inertialen Winkel, Größen und Vektoren, abgesehen vom inertialen Entfernungsvektor $\vec{R}$, können aus den Bilddatensätzen und basierend auf Daten ermittelt werden, die mittels einer der Bilderfassungseinheit 1 zugeordneten, d.h. mit der Bilderfassungseinheit 1 mitbewegten, Inertial-Referenzanlage, z.B. mittels eines Trägheitsnavigationssystems, gewonnen oder erfasst werden.

Unter der vereinfachten Annahme, dass der Betrag **v** des Geschwindigkeitsvektors $\vec{v}$ zwischen beiden Abtastzeitpunkten $t_{N-1}$ und $t_N$ konstant ist, ergibt sich der inertiale Abstand ΔD der den Abtastzeitpunkten $t_{N-1}$ und $t_N$ zugeordneten inertialen Aufnahmeorte $O_{N-1}$ und $O_N$ als v*($t_N$ - $t_{N-1}$) = v*Δt. Bei nicht konstanter Geschwindigkeit kann der inertiale Abstand ΔD entsprechend durch Integration ermittelt werden.

Basierend auf der in FIG. 2 gegebenen Geometrie im inertialen Raum kann der Betrag **R** des inertialen Entfernungsvektors $\vec{R}$, d.h. die Entfernung des Zielobjekts 2, mittels Triangulierung unter Verwendung des Sinus-Satzes berechnet werden, basierend auf einem Dreieck, das definiert ist durch den inertialen Abstand ΔD und die beiden Sichtlinien $S_{N-1}$ und $S_N$.

Aus geometrischen Überlegungen ergibt sich, dass der dem inertialen Abstand ΔD gegenüberliegende Innenwinkel Δσ des oben definierten Dreiecks der Winkeländerung der inertialen Winkel σ entspricht: $\Delta\sigma = \Delta(\sigma_{N-1}, \sigma_N)$. Mit dem der inertialen Entfernung $R_N$ (Länge des inertialen Entfernungsvektors $\vec{R}_N$) gegenüberliegenden inertialen Winkel $\sigma_{N-1}$ gilt nach dem Sinus-Satz die folgende Bedingung:

$$\frac{R_N}{\sin(\sigma_{N-1})} = \frac{\Delta D}{\sin(\Delta\sigma)}$$

Aufgelöst nach der inertialen Entfernung $R_N$ folgt für den Betrag $R_N$ des zugehörigen Entfernungsvektors $\vec{R}_N$:

$$R_N = \Delta D \cdot \frac{\sin(\sigma_{N-1})}{\sin(\Delta\sigma)}$$

Auf Grundlage der obigen Ausführungen, die analog auch für den dreidimensionalen Raum gelten, ergibt sich durch Triangulation aus den Bilddatensätzen damit ein erster Entfernungswert $E_1$ zu:

$$E_1 = \Delta D \cdot \frac{\sin(\sigma_{N-1})}{\sin(\Delta\sigma)}$$

FIG. 3 zeigt schematisch eine Abbildungsgeometrie einer zur Erfassung der Bilddatensätze verwendeten Bildsensoreinheit. Basierend auf Betrachtungen zur Abbildungsgeometrie kann unabhängig vom ersten Entfernungswert

E$_1$ ein zweiter Entfernungswert E$_2$ aus den Bilddatensätzen ermittelt werden, worauf nachfolgend genauer eingegangen wird. Analog zu den Ausführungen zum ersten Entfernungswert E$_1$ gelten auch die nachfolgenden Überlegungen und Ableitungen zum zweiten Entfernungswert E$_2$ analog für den dreidimensionalen Raum.

FIG. 3 zeigt schematisch und nicht maßstabsgetreu eine Abbildungsgeometrie für eine (schematisch dargestellte) Abbildungsoptik 3 einer Bilderfassungseinheit. Dabei bezeichnen:

- **t$_N$** und **t$_{N-1}$** Aufnahmezeitpunkte der Bilddatensätze umfassend auf Bildebene 4 jeweils eine Repräsentation 5 des Zielobjekts 2;
- **f** die Brennweite der Abbildungsoptik 3;
- $\vec{R}$ die inertialen Entfernungsvektoren des Zielobjekts 2 zu jeweiligen Aufnahmezeitpunkten und bezüglich jeweiliger Aufnahmeorte;
- $\Delta\vec{D}$ die Differenz der Entfernungsvektoren;
- $\alpha_{N-1}$ und $\alpha_N$ die Sichtwinkel zu jeweiligen Aufnahmezeitpunkten;
- G die Größe der Repräsentation 5 im Bilddatensatz zum Zeitpunkt **t$_{N-1}$**;
- **ΔG** den Größenunterschied der Repräsentationen 5 der Bilddatensätze zu Aufnahmezeitpunkten **t$_{N-1}$** und **t$_N$**;
- **OG** die Objektgröße des Zielobjekts; und
- das Bezugszeichen 6 die optische Achse der Abbildungsoptik 3.

Gestützt auf Betrachtungen zur Abbildungsgeometrie und gemäß der allgemeinen Abbildungsgleichung der Optik gelten folgende Beziehungen:

$$\frac{OG}{R_{N-1}} = \frac{G}{f} \qquad \frac{OG}{R_N} = \frac{G + \Delta G}{f}$$

wobei **R$_{N-1}$** und **R$_N$** die Beträge jeweiliger inertialer Entfernungsvektoren bezeichnen.

Basierend auf der Beziehung zwischen den inertialen Entfernungsvektoren nach FIG. 2 gilt: $\vec{R}_{N-1} = \vec{R}_N + \Delta\vec{D}$.

Bildet man die Quotienten jeweils der linken und rechten Seite der obigen Abbildungsgleichungen und verwendet man die Beziehung $\vec{R}_{N-1} = \vec{R}_N + \Delta\vec{D}$, so folgt aus den obigen Gleichungen nach Auflösen nach **R$_N$** für den Betrag **R$_N$** des inertialen Entfernungsvektors $\vec{R}_N$:

$$R_N = \Delta D \frac{G}{\Delta G}$$

Verwendet man als Maß für die Größe der jeweiligen Repräsentation 5 die Anzahl **P$_N$** der in der Bildebene 4 der jeweiligen Repräsentation 5 zugeordneten Bildpunkte, z.B. die Anzahl der von der Repräsentation 5 überstrichenen Pixel, kann der Quotient **G/ΔG** der obigen Gleichung geschrieben werden als: **P$_{N-1}$ / (P$_{N-1}$ - P$_N$)**, woraus sich ein zweiter Entfernungswert E$_2$ wie folgt ergibt:

$$E_2 = \Delta D \frac{P_{N-1}}{P_N - P_{N-1}}$$

Aus dem wie oben beschrieben ermittelten ersten Entfernungswert E$_1$ und dem zweiten Entfernungswert E$_2$ kann nun in einem nächsten Schritt die Entfernung E des Zielobjekts 2 durch gewichtete Summation ermittelt werden:

$$E = W_1(t) * E_1 + W_w(t) * E_2$$

Dabei sind W$_1$(t) und W$_2$(t) zeitabhängige Gewichtungsfunktionen.

Die Gewichtungsfunktionen können in geeigneter Weise gewählt werden, basierend beispielsweise auf Simulationsergebnissen oder empirischen Funktionen.

Beispielsweise kann die Gewichtungsfunktion W$_1$(t) so gewählt werden, dass der erste Entfernungswert E$_1$ in einer initialen Bewegungsphase vergleichsweise stark gewichtet wird, da in derartigen Situationen die beschriebene Ermittlung des zweiten Entfernungswerts $E_2$ wegen der noch geringen Bildpunktdynamik vergleichsweise große Fehler oder gar Singularitäten aufweisen kann.

Demgegenüber kann die Gewichtungsfunktion $W_1(t)$ für den ersten Entfernungswert $E_1$ so gewählt werden, dass in einer Annäherungsphase, insbesondere einer finalen Annäherungsphase, mit vergleichsweise geringer Entfernung zum Zielobjekt 2 der erste Entfernungswert $E_1$ weniger stark gewichtet wird, da in solchen Situationen auf Grund der dann vorliegenden höheren Bildpunktdynamik der Fehler der Ermittlung des zweiten Entfernungswerts $E_2$ vergleichsweise gering ist. Beispielhaft kann eine entsprechende empirische Gewichtungsfunktion für den ersten Entfernungswert $E_1$ wie folgt aussehen:

$$W_1(t) = \frac{E}{E_0} * e^{-c*P_N\Delta t}$$

Dabei bezeichnen E die jeweils vorliegende Entfernung, $E_0$ die initiale Entfernung, die beispielsweise als Schätzwert und/oder in Form von Vorwissen über das Zielobjekt 2 bereitgestellt werden kann, **c** eine Konstante, $P_N$ die Anzahl der sich zum Aufnahmezeitpunkt $t_N$ im entsprechenden Bilddatensatz auf Bildebene 4 für die Repräsentation 5 des Zielobjekts 2 ergebenden Bildpunkte und $\Delta t$ die verstrichene Zeit, beispielsweise seit Start eines zum Zielobjekt 2 navigierten oder kommandierten Objekts, insbesondere Lenkflugkörpers. Mit dieser Gewichtungsfunktion wird der erste Entfernungswert $E_1$ mit abnehmender Entfernung zum Zielobjekt 2 und mit zunehmender Größe der Repräsentation 5 des Zielobjekts 2 in der Bildebene 4 weniger stark gewichtet. Insgesamt wird der erste Entfernungswert $E_1$ damit umso weniger gewichtet, je kleiner die Entfernung E ist, und umso größer die Bildpunktdynamik ist, denn mit kleiner werdender Entfernung E ist für ein zum Zielobjekt 2 navigiertes Objekt davon auszugehen, dass auch die Bildpunktdynamik größer wird.

Die Gewichtungsfunktion $W_2(t)$ für den zweiten Entfernungswert $E_2$ kann beispielsweise derart gewählt werden, dass der zweite Entfernungswert $E_2$ umso stärker gewichtet wird, je Größer die Repräsentation 5 des Zielobjekts 2 auf Bildebene 4 und je größer die Bildpunktdynamik ist. Beispielhaft kann eine empirische Struktur der Gewichtungsfunktion $W_2(t)$ wie folgt aussehen:

$$W_2(t) = \frac{P_N}{P_{max}} * f\left(\frac{\Delta P_N - \Delta P_{N-1}}{\Delta t}\right)$$

Dabei bezeichnet $P_N$ die Anzahl der sich zum Aufnahmezeitpunkt $t_N$ im entsprechenden Bilddatensatz auf Bildebene 4 für die Repräsentation 5 des Zielobjekts 2 ergebenden Bildpunkte, $P_{max}$ die maximale Anzahl der Bildpunkte des Bildsensors in der jeweiligen Richtung, in der die Größe der Repräsentation 5 des Zielobjekts 2 auf Bildebene 4 ermittelt wird. Ferner repräsentieren $\Delta P_N$ und $\Delta P_{N-1}$ Maßgrößen für die jeweils in den Aufnahmezeitpunkten $t_N$ und $t_{N-1}$ vorliegende Bildpunktdynamik, und $\Delta t$ bezeichnet die verstrichene Zeit, beispielsweise seit Start eines zum Zielobjekt 2 navigierten bzw. kommandierten Objekts, insbesondere Lenkflugkörpers.

Die in der obigen Gleichung für $W_2(t)$ genannte Funktion f kann in geeigneter Weise, beispielsweise basierend auf Simulation oder empirisch, so gewählt werden, dass der Gewichtungsfunktion $W_2(t)$ bei ausreichend hoher Bildpunktdynamik den auf Basis der Bildpunkte ermittelten zweiten Entfernungswert $E_2$ in geeigneter Weise gewichtet. Damit kann eine Gewichtungsfunktion $W_2(t)$ gewählt werden, die eine umso stärkere Gewichtung des zweiten Entfernungswerts $E_2$ bewirkt, je größer die Größe der Repräsentation 5 des Zielobjekts 2 auf Bildebene 4 ist und je größer die Bildpunktdynamik, insbesondere Pixeldynamik, ist, da in solchen Situationen der zweite Entfernungswert $E_2$ insbesondere zuverlässig und mit vergleichsweise kleinen Fehlern ermittelt werden kann.

Das oben beschriebene beispielhafte Verfahren kann, wie bereits erläutert, analog für den dreidimensionalen Raum umgesetzt werden. Ferner ist ersichtlich, dass die Ermittlung der Entfernung E rein auf passiv ermittelten Daten erfolgen kann, verbunden mit den weiter oben bereits beschriebenen Vorteilen.

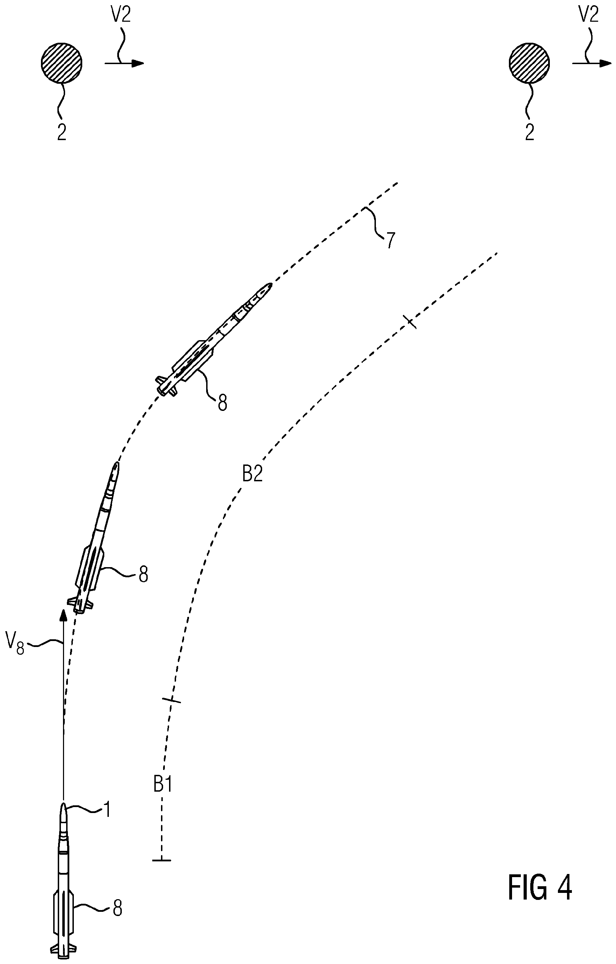

FIG. 4 zeigt beispielhaft eine (nicht maßstabsgetreue) Navigationstrajektorie 7 im Rahmen der Navigation eines Lenkflugkörpers 8 zu einem Zielobjekt 2 basierend auf Bilddaten einer inertial stabilisierten elektro-optischen Bilderfassungseinheit 1, insbesondere eines Zielsuchkopfs 1, der in oder an der Lenkflugkörperspitze integriert oder montiert ist.

Es versteht sich, dass die nachfolgend beschriebene Navigation und Navigationstrajektorie entsprechend bei anderen Objekten und Systemen angewandt werden kann.

Das Zielobjekt 2 bewegt sich im vorliegenden Fall mit einer Geschwindigkeit $v_2$, während sich der Lenkflugkörper 8 mit einer, insbesondere deutlich, größeren Geschwindigkeit vs bewegt.

In einer initialen Bewegungsphase B1, z.B. nach Start des Lenkflugkörpers 8, zeigt die Bildnormale der Bildebene 4 der Bilderfassungseinheit 1 im Wesentlichen in Richtung des Zielobjekts 2, wodurch die inertiale Sichtlinie im Wesentlichen mit der inertialen optischen Achse des Bildsensors der Bilderfassungseinheit 1 zusammenfällt. Aufgrund einer Navigation des Lenkflugkörpers 8 gemäß einer Proportionalnavigation wird der Lenkflugkörper 8 entsprechend kommandiert, wobei die inertiale Sichtlinie zunehmend von der inertialen optischen Achse abweicht, was bedeutet, dass der inertiale Sichtlinienwinkel größer wird, und eine Ermittlung des ersten Entfernungswerts $E_1$ möglich ist.

In der initialen Bewegungsphase B1 mit direktem Kollisionskurs auf das Zielobjekt 2, wie in FIG. 4 dargestellt, können die in dieser Phase vergleichsweise geringen Sichtlinienwinkel unter gewissen Umständen bei dem zur Ermittlung des ersten Entfernungswerts $E_1$ verwendeten Algorithmus zu Singularitäten führen, so dass das vorgeschlagene Verfahren zur Ermittlung der ersten Entfernung $E_1$ nur bedingt verwendbar ist.

Wie oben beschrieben kann in der initialen Bewegungsphase B1 bei noch vergleichsweise großer Entfernung des Zielobjekts 2 und entsprechend kleiner Größe der Repräsentation 5 des Zielobjekts 2 auf Bildebene 4 sowie kleiner Bildpunktdynamik jedoch auch die Ermittlung des zweiten Entfernungswerts $E_2$ basierend auf Bildpunktdaten problematisch sein.

Diese für die initiale Bewegungsphase B1 beschriebenen, potentiellen Schwierigkeiten treten im gezeigten Beispiel für die darauffolgende Annäherungsphase B2 nicht mehr auf, da einerseits ausreichend große inertiale Sichtwinkel vorliegen und/oder andererseits die Größe der Repräsentation 5 des Zielobjekts 2 auf inertialer Bildebene 4 sowie die Bildpunktdynamik ausreichend große Werte annehmen.

Um die Ermittlung der Entfernung gemäß der hierin Erfindung in der initialen Bewegungsphase B1 dennoch zu ermöglichen, insbesondere im Zusammenhang mit üblichen Lenkgesetzen wie der Proportionalnavigation, kann vorgesehen sein, dass der Lenkflugkörper 8 in dieser initialen Bewegungsphase B1 nach einem modifizierten Lenkgesetz navigiert bzw. kommandiert wird.

Dazu ist nach einer Ausgestaltungsvariante vorgesehen, das Lenkgesetz, insbesondere eine Proportionalnavigation, so zu modulieren, dass die Ausrichtung des Bildsensors der Bilderfassungseinheit 1 relativ zum Zielobjekt 2 aktiv verändert wird, um so ausreichend große Sichtlinienwinkel zu erhalten, die eine Ermittlung des ersten Entfernungswerts $E_1$ basierend auf Triangulation, beispielsweise wie oben beschrieben, und damit eine Anwendung des erfindungsgemäßen Verfahrens ermöglichen.

Ein entsprechend modifiziertes Lenkgesetz basierend auf einer Proportionalnavigation kann beispielsweise wie folgt aussehen:

$$b_{com} = \left( v * K * \dot{\lambda} \right) + \left( b_{Amp} * \sin(wt) * e^{-ct} \right)$$

Dabei bezeichnen $\mathbf{b_{com}}$ die kommandierte Beschleunigung senkrecht zum Geschwindigkeitsvektor des Lenkflugkörpers 8, der erste Term ($\mathbf{v*K*}\dot{\lambda}$) die sich aus der Proportionalnavigation ergebende Beschleunigung senkrecht zum Geschwindigkeitsvektor des Lenkflugkörpers 8, wobei v die Geschwindigkeit des Lenkflugkörpers 8, $\mathbf{K}$ eine Konstante und $\dot{\lambda}$ die Drehgeschwindigkeit der Verbindungslinie zwischen Lenkflugkörper 8 und Zielobjekt 2 ist.

Das modifizierte Lenkgesetz umfasst einen weiteren Term in Form einer zeitlich exponentiell gedämpften sinusförmigen Modulation in Abhängigkeit der Zeit. In dem Modulationsterm sind $\mathbf{b_{Amp}}$ eine Konstante, z.B. empirisch oder durch Simulation bestimmbar, $\mathbf{t}$ die Zeit und $\mathbf{w}$ und $\mathbf{c}$ jeweils Konstanten.

Der Modulationsterm führt in der initialen Bewegungsphase B1 zu einer Art Schlingerbewegung des Lenkflugkörpers 8, wodurch die Ausrichtung der Bildebene 4 zum Zielobjekt 2 durch die sinusförmige Modulation kontinuierlich verändert wird. Durch die Veränderung der Ausrichtung der Bildebene 4 ist es im Unterschied zu einer direkten Ausrichtung der Bildebene 4 auf das Zielobjekt 2 hin möglich, die Sichtlinienwinkel so zu variieren, insbesondere modulieren, dass die Ermittlung des ersten Entfernungswerts $E_1$ auf Grundlage der erfindungsgemäß vorgeschlagenen Triangulation möglich ist.

Die Dämpfung im Modulationsterm ist vorzugsweise derart gewählt, dass die Modulation in der darauffolgenden Annäherungsphase B2 im Wesentlichen vernachlässigbar ist/wird. Alternativ ist es möglich, in Abhängigkeit der Entfernung und/oder anderen Parametern, z.B. ab einer gewissen Flugposition oder Flugphase, an Stelle des modulierten Lenkgesetzes das unmodulierte Lenkgesetz zu verwenden, wobei die genannte Flugposition oder Flugphase durch Simulation oder empirisch ermittelt werden kann.

Bei dem oben beschriebenen modifizierten Lenkgesetz handelt es sich lediglich um ein Beispiel. Es versteht sich, dass analog auch andere Modulationsfunktionen in Frage kommen, die jeweils geeignet sind, das Flugverhalten des Lenkflugkörpers 8 und jeweils verwendeter Algorithmen zur Ermittlung des ersten und/oder zweiten Entfernungswerts aneinander anzupassen, insbesondere hinsichtlich einer robusten und zuverlässigen Ermittlung der Entfernung gemäß dem hierin vorgeschlagenen Hybridverfahren.

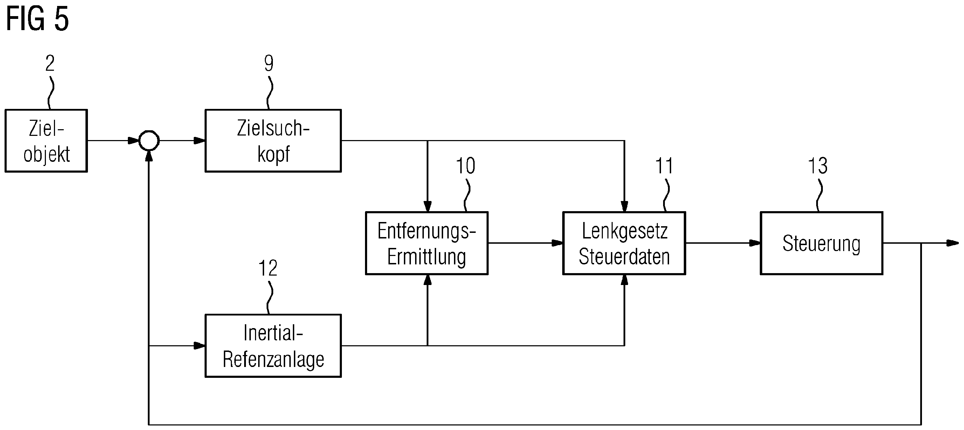

FIG. 5 zeigt beispielhaft einen generischen Aufbau eines Navigations- und Regelkreises für einen Lenkflugkörper. Ausgangspunkt ist dabei ein Zielobjekt 2, zu dem der Lenkflugkörper navigiert werden soll. Vom Zielsuchkopf 9, der eine Bilderfassungseinheit im Sinne der vorbeschriebenen Ausgestaltungen bildet, erfasste Bilddatensätze des Zielobjekts 2 werden einerseits als Eingangsgrößen an eine erste Rechnereinheit 10 zur Ermittlung der Entfernung E übermittelt und andererseits als Eingangsgrößen an eine zweite Rechnereinheit 11 übermittelt, die basierend auf einem Lenkgesetz Flugsteuerungsdaten, in FIG. 5 als Lenkgesetz Steuerdaten bezeichnet, ermittelt.

Zusätzlich zu den Bilddatensätzen erhält die erste Rechnereinheit 10 zur Ermittlung der Entfernung Bewegungs- und Positionsdaten des Lenkflugkörpers von einer Inertial-Referenzanlage 12, die entsprechende Daten auch an die zweite Rechnereinheit 11 zur Ermittlung der Flugsteuerungsdaten übermittelt.

Die von der ersten Rechnereinheit 10 ermittelte Entfernung ist schließlich eine weitere Eingangsgröße für die zweite Rechnereinheit 11 zur Ermittlung der Flugsteuerungsdaten.

Basierend auf den Bilddatensätzen, der Entfernung und den Daten der Inertial-Referenzanlage 12 werden insoweit Steuerdaten zur Kommandierung und Navigation des Lenkflugkörpers zum Zielobjekt 2 ermittelt. Die Flugsteuerungsdaten können z.B. an eine entsprechende Steuerung 13 zur Flugsteuerung des Lenkflugkörpers übermittelt werden, die den Lenkflugkörper entsprechend steuert und zum Zielobjekt 2 navigiert und kommandiert.

Obgleich der Navigations- und Regelkreis vorgehend im Zusammenhang mit einem Lenkflugkörper beschrieben wurde, können entsprechende Navigations- und Regelkreise analog auch bei anderen bewegten Systemen implementiert werden, beispielsweise bei autonomen oder semi-autonomen Fahrzeugen, Digitalkameras usw., wobei im Falle von mobilen Endgeräten Steuerungsinformationen zur Navigation beispielsweise als Instruktionen an den Benutzer ausgegeben werden können.

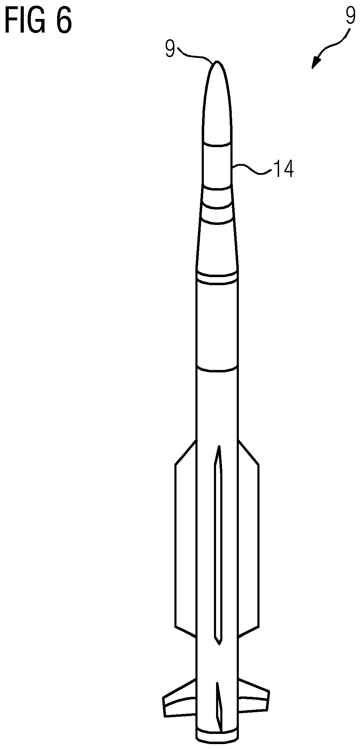

FIG. 6 zeigt einen Lenkflugkörper 8 der den in FIG. 5 gezeigten Navigations- und Regelkreis umfasst. Der Lenkflugkörper 8 umfasst an einer Lenkflugkörperspitze den Zielsuchkopf 9. Dem Zielsuchkopf 9 nachgeschaltet befindet sich eine Flugkörpersteuereinheit 14, die die im Zusammenhang mit FIG. 5 beschriebenen Komponenten, wie die Rechnereinheiten 10 und 11, die Steuerung 13 und die Inertial-Referenzanlage 12, umfassen kann. Basierend auf der Flugkörpersteuereinheit 14 kann der Lenkflugkörper 8 gestützt auf passive Entfernungsermittlung zum Zielobjekt 2 navigiert werden, wobei durch die passive Entfernungsermittlung insbesondere eine Aufklärung des Lenkflugkörpers 8 durch die Entfernungsermittlung als solche unterbunden werden kann.

## Bezugszeichen

1    Bilderfassungseinheit
2    Zielobjekt
3    Abbildungsoptik
4    Bildebene
5    Repräsentation
6    optische Achse
7    Navigationstrajektorie
8    Lenkflugkörper
9    Zielsuchkopf
10    erste Rechnereinheit
11    zweite Rechnereinheit
12    Inertial-Referenzanlage
13    Steuerung
14    Flugkörpersteuereinheit

101 - 106    Verfahrensschritte

B1    initiale Bewegungsphase
B2    Annäherungsphase
$v_2$    Geschwindigkeit des Zielobjekts
vs    Geschwindigkeit des Lenkflugkörpers

## Patentansprüche

1. Rechnerbasiertes Verfahren zur Ermittlung der Entfernung (E) eines Zielobjekts (2) von einer elektro-optischen Sensoreinheit (1) basierend auf monokularen Sensordaten der Sensoreinheit (1), wobei es sich bei der elektro-optischen Sensoreinheit (1) um eine elektro-optische Bilderfassungseinheit (9) handelt, wobei

- die Sensordaten einen ersten und einen zweiten Datensatz umfassen, wobei jeder Datensatz jeweils eine Repräsentation (5) des Zielobjekts (2) umfasst, und wobei die beiden Datensätze bezüglich zweier, voneinander verschiedener Aufnahmeorte ($O_{N-1}$, $O_N$) erzeugt sind oder werden,
- die Entfernung (E) als eine gewichtete Kombination zumindest eines ersten ($E_1$) und eines zweiten Entfernungswerts ($E_2$) ermittelt (106) wird,
- der erste Entfernungswert ($E_1$) basierend auf dem ersten und zweiten Datensatz auf Grundlage von Triangulation ermittelt (102) wird,
- der zweite Entfernungswert ($E_2$) auf Grundlage sich auf Sensorebene (4) der Sensoreinheit (1) aus dem ersten und zweiten Datensatz ergebender, insbesondere ermittelter, Abmessungen (G) und einer Abmessungsdifferenz (DG) der Repräsentationen (5) des Zielobjekts (2) ermittelt (104) wird, und
- die Aufnahmeorte ($O_{N-1}$, $O_N$) und/oder ein Abstand ($\Delta D$) zwischen den Aufnahmeorten ($O_{N-1}$, $O_N$) ermittelt wird/werden und zur Ermittlung des ersten ($E_1$) und zweiten Entfernungswerts ($E_2$) herangezogen wird/werden.

2. Verfahren nach Anspruch 1, wobei die Triangulierung auf Grundlage eines Dreiecks erfolgt, das bezüglich eines der Sensoreinheit (1) zugeordneten inertialen Bezugssystems definiert ist durch die sich aus dem ersten und zweiten Datensatz zwischen der Sensoreinheit (1) und dem Zielobjekt (2) ergebenden inertialen Sichtlinien (S) und der inertialen Verbindungslinie ($\Delta D$) zwischen den beiden Aufnahmeorten ($O_{N-1}$, $O_N$).

3. Verfahren nach Anspruch 1 oder 2, wobei die Aufnahmeorte ($O_{N-1}$, $O_N$) und/oder der Abstand ($\Delta D$) zwischen den Aufnahmeorten ($O_{N-1}$, $O_N$) auf Basis von Messdaten einer der Sensoreinheit (1) zugeordneten inertialen Messeinheit, insbesondere einer Inertial-Referenzeinheit, ermittelt wird/werden.

4. Verfahren nach einem der vorhergehenden Ansprüche, wobei die Abmessungen (G) und/oder die Abmessungsdifferenz ($\Delta G$) der Repräsentationen (5) des Zielobjekts (2) aus den Datensätzen bezüglich zumindest einer in einer inertialen Sensorebene (4) gelegenen inertialen Richtung ermittelt wird/werden.

5. Verfahren nach Anspruch 4, wobei als Maß für die Abmessung der Repräsentation (5) des Zielobjekts (2) in der jeweiligen inertialen Sensorebene (4) eines Datensatzes die Anzahl ($P_{N-1}$, $P_N$) der der Repräsentation (5) des Zielobjekts (2) in der jeweiligen inertialen Sensorebene (4) längs der jeweiligen Richtung zugeordneten Bildpunkte verwendet wird, und wobei als Maß für die Abmessungsdifferenz ($\Delta G$) die Differenz der Anzahl ($P_{N-1}$. $P_N$) der sich aus dem ersten und zweiten Datensatz ergebenden Bildpunkte verwendet wird, und wobei das Verfahren als weiteren Schritt umfasst: Ermitteln der Anzahl ($P_{N-1}$, $P_N$) und der Differenz der Anzahl ($P_{N-1}$, $P_N$) der Bildpunkte.

6. Verfahren nach einem der vorhergehenden Ansprüche, wobei der erste und zweite Entfernungswert ($E_1$, $E_2$) aus zeitlich aufeinanderfolgend, insbesondere unmittelbar aufeinanderfolgend, erzeugten Datensätzen ermittelt werden, wobei ein zeitlicher Abstand ($\Delta t$) der zeitlich aufeinanderfolgend erzeugten Datensätze in Abhängigkeit der inertialen Geschwindigkeit (v) und/oder in Abhängigkeit der Bewegungsdynamik der Sensoreinheit (1) gewählt wird.

7. Verfahren nach einem der vorhergehenden Ansprüche, wobei die Sensoreinheit (1) auf Grundlage der Sensordaten, insbesondere der ermittelten Entfernung (E), längs einer Trajektorie (7) zum Zielobjekt (2) navigiert wird, wobei die Bewegung der Sensoreinheit (1) längs der Trajektorie (7) zumindest abschnittsweise nach einem Lenkgesetz kommandiert wird, und/oder wobei die Bewegung der Sensoreinheit (1) zumindest abschnittsweise längs der Trajektorie (7) gemäß einem modifizierten Lenkgesetz kommandiert wird derart, dass sich bei der Bewegung nach dem modifizierten Lenkgesetz die inertialen Sichtlinienwinkel ($\Psi_\Gamma$) der inertialen Sichtlinien (S) zwischen Sensoreinheit (1) und Zielobjekt (2) für den ersten und zweiten Datensatz unterscheiden.

8. Verfahren nach Anspruch 7, wobei das modifizierte Lenkgesetz auf Grundlage einer dem Lenkgesetz überlagerten Modulationsfunktion erzeugt wird, wobei die Modulationsfunktion eine Modulation oder eine gedämpfte Modulation des Lenkgesetzes bewirkt.

9. Verfahren nach einem der vorhergehenden Ansprüche, wobei der erste Entfernungswert ($E_1$) mit einer ersten Gewichtungsfunktion ($W_1(t)$) gewichtet wird und der zweite Entfernungswert ($E_2$) mit einer zweiten Gewichtungsfunktion ($W_2(t)$) gewichtet wird, wobei für die erste und/oder zweite Gewichtungsfunktion ($W_{1,2}(t)$) zumindest eine der nachfolgenden Bedingungen erfüllt ist:

- die erste Gewichtungsfunktion ($W_1(t)$) liefert einen von der ermittelten Entfernung (E) abhängigen Wert, wobei der Wert umso kleiner ist, je kleiner die Entfernung (E) ist;
- die erste Gewichtungsfunktion ($W_1(t)$) liefert einen vom Fehler des ersten Entfernungswertes (E1) und/oder vom Fehler des zweiten Entfernungswertes (E2) abhängigen Wert, wobei der Wert umso größer ist, je kleiner der Fehler des ersten Entfernungswerts (E1) ist, oder umso kleiner ist, je kleiner der Fehler des zweiten Entfernungswerts (E2) ist;

- die erste Gewichtungsfunktion ($W_1(t)$) und/oder die zweite Gewichtungsfunktion ($W_2(t)$) entspricht/entsprechen einer empirisch ermittelten Funktion;

- der ersten Gewichtungsfunktion ($W_1(t)$) und/oder der zweiten Gewichtungsfunktion ($W_2(t)$) wird/werden insbesondere dann ein Nullwert zugewiesen, wenn ein zur Ermittlung des ersten Entfernungswerts (E1) bzw. des zweiten Entfernungswerts (E2) verwendeter Algorithmus eine Singularität aufweist;

- der ersten Gewichtungsfunktion ($W_1(t)$) und/oder der zweiten Gewichtungsfunktion ($W_2(t)$) wird/werden insbesondere dann ein Nullwert zugewiesen, wenn der ermittelte erste Entfernungswert ($E_1$) bzw. der ermittelte zweite Entfernungswert ($E_2$) um einen vorgegebenen Wert von einer empirisch ermittelten Entfernung oder einer durch ein unabhängiges Verfahren ermittelten Entfernung abweicht;

- die erste Gewichtungsfunktion ($W_1(t)$) und/oder die zweite Gewichtungsfunktion ($W_2(t)$) ist/sind abhängig von Bewegungsdaten der Sensoreinheit (1);

- die erste Gewichtungsfunktion ($W_1(t)$) und/oder die zweite Gewichtungsfunktion ($W_2(t)$) ist/sind abhängig von einer sich auf inertialer Sensorebene (4) ermittelten Abmessung (G) und/oder Abmessungsdynamik der Repräsentation (5) des Zielobjekts (2), wobei vorzugsweise die erste Gewichtungsfunktion ($W_1(t)$) umso größer ist, je kleiner die Abmessung (G) und/oder Abmessungsdynamik der Repräsentation (5) des Zielobjekts (2) ist, und die zweite Gewichtungsfunktion ($W_2(t)$) umso größer ist, je größer die Abmessung (G) und/oder Abmessungsdynamik der Repräsentation (5) des Zielobjekts (2) ist.

10. Verfahren zur Navigation eines Lenkflugkörpers (8) zu einem Zielobjekt (2) umfassend:

- Ermitteln (106) der Entfernung (E) eines Zielobjekts (2) vom Lenkflugkörper (8) gemäß einem Verfahren nach einem der Ansprüche 1 bis 9;
- Ermitteln von Lenksignalen zur Lenkungssteuerung des Lenkflugkörpers (8) in Abhängigkeit der ermittelten Entfernung (E) basierend auf einem Lenkgesetz oder, zumindest teilweise, auf einem modulierten Lenkgesetz; und
- Steuerung von Lenk- und/oder Antriebskomponenten des Lenkflugkörpers (8) gemäß den ermittelten Lenksignalen zur Navigation des Lenkflugkörpers (8) zum Zielobjekt (2).

11. Elektro-optisches Sensorsystem umfassend als Sensoreinheit (1) eine elektro-optische Bilderfassungseinheit (9) mit Mitteln zur Erzeugung monokularer Bilddatensätze, und zumindest eine mit der Bilderfassungseinheit (9) datentechnisch verbundene oder verbindbare Rechnereinheit (10), wobei die Bilderfassungseinheit (9) und die Rechnereinheit (10) Mittel zur Durchführung eines Verfahrens nach einem der Ansprüche 1 bis 9 oder zur Durchführung eines Verfahrens nach Anspruch 10 umfassen.

12. Elektro-optisches Sensorsystem nach Anspruch 11, umfassend des Weiteren eine Inertial-Referenzeinheit, die zumindest mit der zumindest einen Rechnereinheit (10) und/oder zumindest einer weiteren Rechnereinheit (11) datentechnisch verbunden ist, und wobei die Inertial-Referenzeinheit Mittel umfasst, die bei deren Betrieb Positionsdaten und/oder Bewegungsdaten des Sensorsystems bezüglich eines inertialen Bezugssystems ermitteln, und wobei die Rechnereinheit (10) und/oder die weitere Rechnereinheit (11) des Weiteren Mittel umfasst/en, den ersten und/oder zweiten Entfernungswert ($E_1$, $E_2$) zumindest teilweise auf Grundlage der Positions- und/oder Bewegungsdaten zu ermitteln.

13. Elektro-optisches Sensorsystem nach einem der Ansprüche 11 oder 12, wobei die Rechnereinheit (10) und/oder die zumindest eine weitere Rechnereinheit (11) des Weiteren Mittel umfasst/en zur Erkennung des Zielobjekts (2) in mit der Sensoreinheit (1) erfassten Sensordaten.

14. Lenkflugkörper (8) umfassend ein elektro-optisches Sensorsystem (1) nach einem der Ansprüche 11 bis 13.

**Claims**

1. Computer-based method for determining the range (E) of a target object (2) from an electro-optical sensor unit (1) based on monocular sensor data of the sensor unit (1), the electro-optical sensor unit (1) being an electro-optical image capture unit (9), wherein

- the sensor data comprise a first and a second dataset, each dataset comprising a respective representation (5) of the target object (2), and the two datasets having been or being generated for two different recording locations ($O_{N-1}$, $O_N$),
- the range (E) is determined (106) as a weighted combination of at least a first ($E_1$) and a second ($E_2$) range value,
- the first range value ($E_1$) is determined (102) based on the first and second datasets on the basis of triangulation,
- the second range value ($E_2$) is determined (104) on the basis of, in particular determined, dimensions (G), obtained from the first and second datasets at the sensor level (4) of the sensor unit (1), and a difference in dimensions ($\Delta G$) of the representations (5) of the target object (2), and
- the recording locations ($O_{N-1}$, $O_N$) and/or a distance ($\Delta D$) between the recording locations ($O_{N-1}$, $O_N$) is/are determined and is/are used to determine the first ($E_1$) and second ($E_2$) range values.

2. Method according to Claim 1, wherein the triangulation is performed on the basis of a triangle that is defined, in relation to an inertial reference system associated with the sensor unit (1), by the inertial lines of sight (S), obtained from the first and second datasets, between the sensor unit (1) and the target object (2) and the inertial connecting line ($\Delta D$) between the two recording locations ($O_{N-1}$, $O_N$).

3. Method according to Claim 1 or 2, wherein the recording locations ($O_{N-1}$, $O_N$) and/or the distance ($\Delta D$) between the recording locations ($O_{N-1}$, $O_N$) is/are determined on the basis of measurement data of an inertial measurement unit, in particular an inertial reference unit, associated with the sensor unit (1).

4. Method according to one of the preceding claims, wherein the dimensions (G) and/or the difference in dimensions ($\Delta G$) of the representations (5) of the target object (2) is/are determined from the datasets for at least one inertial direction situated on an inertial sensor level (4).

5. Method according to Claim 4, wherein the measurement used for the dimension of the representation (5) of the target object (2) on the respective inertial sensor level (4) of a dataset is the number ($P_{N-1}$, $P_N$) of picture elements associated with the representation (5) of the target object (2) on the respective inertial sensor level (4) along the respective direction, and wherein the measurement used for the difference in dimensions ($\Delta G$) is the difference in the number ($P_{N-1}$, $P_N$) of picture elements obtained from the first and second datasets, and wherein a further step that the method comprises is: determining the number ($P_{N-1}$, $P_N$) and the difference in the number ($P_{N-1}$, $P_N$) of picture elements.

6. Method according to one of the preceding claims, wherein the first and second range values ($E_1$, $E_2$) are determined from datasets generated at successive times, in particular in direct succession, an interval of time ($\Delta t$) between the datasets generated at successive times being chosen according to the inertial velocity (v) and/or according to the motion dynamics of the sensor unit (1).

7. Method according to one of the preceding claims, wherein the sensor unit (1) is navigated along a trajectory (7) to the target object (2) on the basis of the sensor data, in particular the determined range (E), wherein the motion of the sensor unit (1) along at least portions of the trajectory (7) is commanded according to a guidance law, and/or wherein the motion of the sensor unit (1) along at least portions of the trajectory (7) is commanded using a modified guidance law in such a way that the motion according to the modified guidance law results in the inertial line-of-sight angles ($\Psi_\Gamma$) of the inertial lines of sight (S) between the sensor unit (1) and the target object (2) differing for the first and second datasets.

8. Method according to Claim 7, wherein the modified guidance law is generated on the basis of a modulation function that is overlaid on the guidance law, the modulation function bringing about a modulation or an attenuated modulation of the guidance law.

9. Method according to one of the preceding claims, wherein the first range value ($E_1$) is weighted with a first weighting function ($W_1(t)$) and the second range value ($E_2$) is weighted with a second weighting function ($W_2(t)$), at least one of the following conditions being met for the first and/or second weighting function ($W_{1,2}(t)$):

- the first weighting function ($W_1(t)$) delivers a value that is dependent on the determined range (E), the value being smaller the shorter the range (E);
- the first weighting function ($W_1(t)$) delivers a value that is dependent on the error in the first range value (E1) and/or on the error in the second range value (E2), the value being larger the smaller the error in the first range value (E1), or being smaller the smaller the error in the second range value (E2);

- the first weighting function ($W_1(t)$) and/or the second weighting function ($W_2(t)$) correspond/s to an empirically determined function;
- the first weighting function ($W_1(t)$) and/or the second weighting function ($W_2(t)$) is/are assigned a zero value in particular when an algorithm used to determine the first range value (E1) or the second range value (E2) has a singularity;
- the first weighting function ($W_1(t)$) and/or the second weighting function ($W_2(t)$) is/are assigned a zero value in particular when the determined first range value ($E_1$) or the determined second range value ($E_2$) differs by a predefined value from an empirically determined range or a range determined by an independent method;
- the first weighting function ($W_1(t)$) and/or the second weighting function ($W_2(t)$) is/are dependent on motion data of the sensor unit (1);
- the first weighting function ($W_1(t)$) and/or the second weighting function ($W_2(t)$) is/are dependent on a dimension (G) and/or dimension dynamics, determined at inertial sensor level (4), of the representation (5) of the target object (2), the first weighting function ($W_1(t)$) preferably being larger the smaller the dimension (G) and/or dimension dynamics of the representation (5) of the target object (2), and the second weighting function ($W_2(t)$) being larger the larger the dimension (G) and/or dimension dynamics of the representation (5) of the target object (2).

10. Method for navigating a guided missile (8) to a target object (2), comprising:

- determining (106) the range (E) of a target object (2) from the guided missile (8) using a method according to one of Claims 1 to 9;
- determining guidance signals for controlling the guidance of the guided missile (8) according to the determined range (E) based on a guidance law or, at least in part, on a modulated guidance law; and
- controlling guidance and/or drive components of the guided missile (8) using the determined guidance signals in order to navigate the guided missile (8) to the target object (2).

11. Electro-optical sensor system comprising, as the sensor unit (1), an electro-optical image capture unit (9) having means for generating monocular image datasets, and at least one computing unit (10) connected or connectable to the image capture unit (9) for data transfer purposes, the image capture unit (9) and the computer unit (10) comprising means for carrying out a method according to one of Claims 1 to 9 or for carrying out a method according to Claim 10.

12. Electro-optical sensor system according to Claim 11, additionally comprising an inertial reference unit connected at least to the at least one computer unit (10) and/or to at least one further computer unit (11) for data transfer purposes, and wherein the inertial reference unit comprises means that, when operating, determine position data and/or motion data of the sensor system in relation to an inertial reference system, and wherein the computer unit (10) and/or the further computer unit (11) additionally comprise/s means for determining the first and/or second range value ($E_1$, $E_2$) at least in part on the basis of the position and/or motion data.

13. Electro-optical sensor system according to either of Claims 11 and 12, wherein the computer unit (10) and/or the at least one further computer unit (11) additionally comprise/s means for identifying the target object (2) in sensor data captured using the sensor unit (1).

14. Guided missile (8) comprising an electro-optical sensor system (1) according to one of Claims 11 to 13.

**Revendications**

1. Procédé informatique de détermination de la distance (E) d'un objet cible (2) à une unité de détection électro-optique (1) sur la base de données de détection monoculaire de l'unité de détection (1), l'unité de détection électro-optique (1) étant une unité d'acquisition d'image électro-optique (9),

- les données de détection comprenant un premier et un deuxième ensemble de données, chaque ensemble de données comprenant une représentation (5) de l'objet cible (2), et les deux ensembles de données étant générés par rapport à deux sites de capture différents ($O_{N-1}$, $O_N$),
- la distance (E) étant déterminée (106) comme une combinaison pondérée d'au moins une première ($E_1$) et une deuxième ($E_2$) valeur de distance,
- la première valeur de distance ($E_1$) étant déterminée sur la base des premier et deuxième ensembles de données selon le principe d'une triangulation (102),
- la deuxième valeur de distance ($E_2$) étant déterminée (104) sur la base de dimensions (G) qui résultent des premier et deuxième ensembles de données, notamment sont déterminées à partir de ceux-ci, sur un plan de détection (4) de l'unité de détection (1) et d'une différence de dimension ($\Delta G$) des représentations (5) de l'objet cible (2), et
- les sites de capture ($O_{N-1}$, $O_N$) et/ou une distance ($\Delta D$) entre les sites de capture ($O_{N-1}$, $O_N$) étant déterminés et utilisés pour déterminer la première ($E_1$) et la deuxième ($E_2$) valeur de distance.

2. Procédé selon la revendication 1, la triangulation étant effectuée sur la base d'un triangle qui est défini par rapport à un système de référence inertiel associé à l'unité de détection (1) par des lignes de visée inertielle (S), résultant des premier et deuxième ensembles de données entre l'unité de détection (1) et l'objet cible (2), et la ligne de liaison inertielle ($\Delta D$) entre les deux sites de capture ($O_{N-1}$, $O_N$).

3. Procédé selon la revendication 1 ou 2, les sites de capture ($O_{N-1}$, $O_N$) et/ou la distance ($\Delta D$) entre les sites de capture ($O_{N-1}$, $O_N$) étant déterminés sur la base de données de mesure d'une unité de mesure inertielle associée à l'unité de détection (1), en particulier d'une unité de référence inertielle.

4. Procédé selon l'une des revendications précédentes, les dimensions (G) et/ou la différence de dimension ($\Delta G$) des représentations (5) de l'objet cible (2) étant déterminées à partir des ensembles de données par rapport à au moins une direction inertielle située dans un plan de détection inertiel (4).

5. Procédé selon la revendication 4, le nombre ($P_{N-1}$, $P_N$) de la représentation (5) de l'objet cible (2) dans le plan de détection inertiel respectif (4) le long de la direction respective de pixels associés étant utilisé comme mesure de la dimension de la représentation (5) de l'objet cible (2) dans le plan de détection inertiel respectif (4) d'un ensemble de données, et la différence de nombre ($P_{N-1}$, $P_N$) de points d'image résultant des premier et deuxième ensembles de données étant utilisée comme mesure de la différence de dimension ($\Delta G$), et le procédé comprenant comme étape supplémentaire : la détermination du nombre ($P_{N-1}$, $P_N$) et de la différence du nombre ($P_{N-1}$, $P_N$) de pixels.

6. Procédé selon l'une des revendications précédentes, les première et deuxième valeurs de distance ($E_1$, $E_2$) étant déterminées à partir d'ensembles de données générés successivement dans le temps, notamment de manière immédiatement successive, un intervalle de temps ($\Delta t$) des ensembles de données générés successivement dans le temps étant sélectionné en fonction de la vitesse inertielle (v) et/ou en fonction de la dynamique de mouvement de l'unité de détection (1).

7. Procédé selon l'une des revendications précédentes, l'unité de détection (1) étant guidée le long d'une trajectoire (7) jusqu'à l'objet cible (2) sur la base des données de détection, en particulier de la distance déterminée (E), le mouvement de l'unité de détection (1) le long de la trajectoire (7) étant commandé au moins par portions selon une loi de direction, et/ou le mouvement de l'unité de détection (1) étant commandé au moins par portions le long de la trajectoire (7) selon une loi de direction modifiée de manière à ce que, pendant le mouvement selon la loi de direction modifiée, les angles ($\Psi_r$) des lignes de visée inertielle (S) entre l'unité de détection (1) et l'objet cible (2) diffèrent pour les premier et deuxième ensembles de données.

8. Procédé selon la revendication 7, la loi de direction modifiée étant générée sur la base d'une fonction de modulation superposée à la loi de direction, la fonction de modulation effectuant une modulation ou une modulation amortie de la loi de direction.

9. Procédé selon l'une des revendications précédentes, la première valeur de distance ($E_1$) étant pondérée avec une première fonction de pondération ($W_1(t)$) et la deuxième valeur de distance ($E_2$) étant pondérée avec une deuxième fonction de pondération ($W_2(t)$), l'une au moins des conditions suivantes étant remplie pour la première et/ou la deuxième fonction de pondération ($W_{1,2}(t)$):

- la première fonction de pondération ($W_1(t)$) fournissant une valeur dépendante de la distance (E) déterminée, la valeur étant d'autant plus petite que la distance (E) est petite ;
- la première fonction de pondération ($W_1(t)$) fournissant une valeur dépendante de l'erreur de la première valeur de distance ($E_1$) et/ou de l'erreur de la deuxième valeur de distance ($E_2$), la valeur étant d'autant plus petite que l'erreur de la première valeur de distance ($E_1$) est petite, ou la valeur étant d'autant plus petite que l'erreur de la deuxième valeur de distance ($E_2$) est petite ;
- la première fonction de pondération ($W_1(t)$) et/ou la deuxième fonction de pondération ($W_2(t)$) correspondant

à une fonction déterminée empiriquement ;

- une valeur nulle étant alors attribuée à la première fonction de pondération ($W_1$(t)) et/ou à la deuxième fonction de pondération ($W_2$(t)) lorsqu'un algorithme utilisé pour déterminer la première valeur de distance ($E_1$) ou la deuxième valeur de distance ($E_2$) présente une singularité ;

- une valeur nulle étant alors attribuée à la première fonction de pondération ($W_1$(t)) et/ou à la deuxième fonction de pondération ($W_2$(t)) lorsque la première valeur de distance déterminée ($E_1$) ou la deuxième valeur de distance déterminée ($E_2$) s'écarte d'une valeur spécifiée d'une distance déterminée empiriquement ou d'une distance déterminée par un procédé indépendant ;

- la première fonction de pondération ($W_1$(t)) et/ou la deuxième fonction de pondération ($W_2$(t)) dépendant de données de mouvement de l'unité de détection (1) ;

- la première fonction de pondération ($W_1$(t)) et/ou la deuxième fonction de pondération ($W_2$(t)) étant dépendantes d'une dimension (G) et/ou d'une dynamique de dimension de la représentation (5) de l'objet cible (2), déterminées sur un plan de détection inertiel (4), de préférence la première fonction de pondération ($W_1$(t)) étant d'autant plus grande que la dimension (G) et/ou la dynamique de dimension de la représentation (5) de l'objet cible (2) sont petites, et la deuxième fonction de pondération ($W_2$(t)) étant d'autant plus grande que la dimension (G) et/ou la dynamique de dimension de la représentation (5) de l'objet cible (2) sont grandes.

10. Procédé de navigation d'un engin volant guidé (8) vers un objet cible (2), ledit procédé comprenant les étapes suivantes :

- déterminer (106) la distance (E) d'un objet cible (2) à l'engin volant guidé (8) selon un procédé selon l'une des revendications 1 à 9 ;
- déterminer des signaux de direction destinés à la commande de direction de l'engin volant guidé (8) en fonction de la distance déterminée (E) sur la base d'une loi de direction ou, au moins en partie, d'une loi de direction modulée ; et
- commander des composants de direction et/ou d'entraînement de l'engin volant guidé (8) en fonction des signaux de direction déterminés pour faire naviguer l'engin volant guidé (8) vers l'objet cible (2).

11. Système de détection électro-optique comprenant comme unité de détection (1) une unité d'acquisition d'image électro-optique (9) munie de moyens de génération d'ensembles de données d'image monoculaire, et au moins une unité informatique (10) qui est reliée ou peut être reliée à l'unité d'acquisition d'image (9) du point de vue informatique, l'unité d'acquisition d'image (9) et l'unité informatique (10) comprenant des moyens destinés à mettre en œuvre un procédé selon l'une des revendications 1 à 9 ou à mettre en œuvre un procédé selon la revendication 10.

12. Système de détection électro-optique selon la revendication 11, comprenant en outre une unité de référence inertielle qui est reliée du point de vue informatique à au moins une unité informatique (10) et/ou à au moins une autre unité informatique (11), et l'unité de référence inertielle comprenant des moyens qui, pendant le fonctionnement de celle-ci, déterminent des données de position et/ou des données de mouvement du système de détection par rapport à un système de référence inertielle, et l'unité informatique (10) et/ou l'autre unité informatique (11) comprenant en outre des moyens de détermination de la première et/ou la deuxième valeur de distance ($E_1$, $E_2$) au moins en partie sur la base des données de position et/ou de mouvement.

13. Système de détection électro-optique selon l'une des revendications 11 ou 12, l'unité informatique (10) et/ou l'au moins une autre unité informatique (11) comprenant en outre des moyens de détection de l'objet cible (2) dans des données de détection détectées avec l'unité de détection (1).

14. Engin volant guidé (8) comprenant un système de détection électro-optique (1) selon l'une des revendications 11 à 13.

# FIG 1

101 — Bereitstellen oder Erzeugen von monokularen Bilddaten, umfassend erste und zweite Bilddatensätze umfassend jeweils eine Repräsentation eines Zielobjekts bezüglich verschiedener Aufnahmeorte

102 — Ermitteln eines ersten Entfernungwerts basierend auf Triangulation aus dem ersten und zweiten Bilddatensatz

103 — plausibel — nein

ja

104 — Ermitteln eines zweiten Entfernungwerts basierend auf einer Abmessung und Abmessungsdifferenz der Repräsentation bezüglich der Sensorebene

nein — plausibel — 105

ja

106 — Ermitteln der Entfernung des Zielobjekts durch gewichtete Summe des ersten und zweiten Entfernungswerts

FIG 2

# FIG 3

V2

2

V2

2

7

B2

8

8

V8

B1

1

8

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014008968 A1
- US 5373318 A